# EUROPEAN PATENT SPECIFICATION

(11) **EP 2 650 884 B1**
(45) Date of publication and mention of the grant of the patent: **11.05.2022**
(21) Application number: 11847628.2
(22) Date of filing: 03.06.2011
(51) Int. Cl.: G21D 3/00, G21C 17/00, G05B 19/418

(54) **INFORMATION PROCESSING METHOD OF DIGITAL CONTROL SYSTEMS OF NUCLEAR POWER UNITS**
INFORMATIONSVERARBEITUNGSVERFAHREN EINES DIGITALISIERTES STEUERSYSTEMS EINER KERNKRAFTANLAGE
PROCÉDÉ DE TRAITEMENT D'INFORMATION DES SYSTÈMES DE COMMANDE NUMÉRISÉ POUR DES CENTRALE NUCLÉAIRES

(30) Priority: 10.12.2010 CN 201010582855; 10.12.2010 CN 201010582852; 10.12.2010 CN 201010582816; 10.12.2010 CN 201010582866
(43) Date of publication of application: 16.10.2013
(73) Proprietor: China General Nuclear Power Corporation, Shenzhen, Guangdong 518031 (CN); Dayabay Nuclear Power Operations and Management Co., Ltd., Shenzhen, Guangdong 518031 (CN)
(72) Inventor: ZHOU, Chuangbin, Guangdong 518031 (CN); HUANG, Qingwu, Guangdong 518031 (CN); LUO, Yixiong, Guangdong 518031 (CN); FENG, Wenbiao, Guangdong 518031 (CN); LIU, Wenbin, Guangdong 518031 (CN); CUI, Weihong, Guangdong 518031 (CN); HUANG, Yuanzheng, Guangdong 518031 (CN); ZHANG, Jinzhe, Guangdong 518031 (CN); SUN, Wenliang, Guangdong 518031 (CN); XIAO, Zhe, Guangdong 518031 (CN)
(74) Representative: Gulde & Partner
(86) International application number: PCT/CN2011/075293
(87) International publication number: WO 2012/075789

(56) References cited:
- WO-A1-98/24094
- CN-A- 101 149 992
- CN-A- 101 149 992
- CN-A- 101 447 240
- CN-A- 101 458 973
- CN-A- 101 477 377
- CN-A- 101 483 076
- CN-A- 101 740 153
- CN-A- 102 080 579
- JP-A- 61 169 907
- KR-A- 20100 048 449
- US-A1- 2007 270 980
- None

## Description

### Field of the Invention

The present invention belongs to the nuclear power control field, and particularly relates to an information processing method of the digital control system of the nuclear power units.

### Background of the Invention

A pressurized water reactor (PWR) nuclear power plant is mainly composed of a pressurized water reactor, a first loop system and a second loop system. Nuclear fission enters the ground from within a reactor core composed of nuclear fuel in a pressure container. PWR uses the low-enriched uranium as the fuel and the light water as a coolant and moderator. The heat released by the nuclear fission is taken out of the reactor by the high-pressure water flowing through a first loop system in the reactor, and transferred to the water in a second loop in a steam generator. The steam produced by the heated water pushes a steam turbine, which then drives a generator to generate electricity.

A nuclear power plant has a complicated system, has its start-stop controlled through the overall program of the nuclear power units. The overall program of the nuclear power units refers to the program used by the operating personnel for controlling or changing the state of the entire units when the units are running. The overall program of the nuclear power units is very complicated; when the start-stop of the nuclear power units is controlled through the overall program of the nuclear power units, in order to increase the overall sense of units' start-stop and each subprogram and embody the correlation among the individual subprograms and the logical structure inside the subprogram, an operator establishes the overall sense of the units' start-stop with the help of the overall program of the nuclear power units. When a distributed control system (DCS) is used in a CPR1000 nuclear power plant for controlling operation of the nuclear power units, part of the contents of the overall program of the nuclear power units are placed into a computer for controlling the power station.

In a DCS control room, an operator completes various works at an operator work station, losing the direct view compared with working at a traditional control room. Therefore, in order to simplify the operational complexity of the overall program of the nuclear power units, corresponding operating regulations generally have to be established for the overall program of the nuclear power units. For example, for the paper-based regulations of the prior art, when an operator executes a certain program, a corresponding control screen needs to be searched in DCS according to a mark on the paper-based regulations, with the steps complicated, making it difficult to perform fast and accurate control of start-stop of the nuclear power units, with the consequence of low execution efficiency and not fully showing the advantages of DCS.

Especially for an application occasion in the nuclear power plant having the rapid intervention requirement, since the paper-based program is still used in the overall program of the existing nuclear power units, when an operator executes a certain program, a corresponding control screen needs to be searched in DCS according to a mark on the paper-based regulations, thus difficult to satisfy the need of the application occasion in the nuclear power plant having the rapid intervention requirement.

For example, for an application occasion of the first loop water pressure test in the nuclear power plant, the first loop water pressure test, as an oversize, high-risk and difficult test project of the PWR nuclear power units, is both a test process and a running operating process, especially for the pressure fluctuations caused by various reasons during the test period that need quick cause identification and intervention. The convenience and security of the running operating process is dependent on the man-machine interface.

Because in the existing DCS control room an operator completes various works at an operator work station through the screen operation, due to restriction of the display area of the display device, an operator loses the broad view. During the water pressure test, if the control is performed according to the screen of the normal operation, the supervisory parameters, alarms, manipulators and the like are dispersed on different screens, together with an external test indicating device, and an operator needs to search for the corresponding different control screens, with the steps complicated and the execution efficiency low, completely not satisfying the requirements of the high risk water pressure test.

Likewise, when the control is performed on the start-stop process of the turbo-generator set in the nuclear power plant, because the turbo-generator set is one of most important constituent devices of the nuclear power plant, and the start-stop process of the turbo-generator set is complex, there are a plurality of systems involved and parameters needing to be supervised. Therefore, if the overall program of the existing nuclear power units is controlled according to the system interface, the supervisory parameters, alarms, manipulators and the like are dispersed on different screens, and an operator needs to search for the corresponding different control screens, with the steps complicated and the execution efficiency low, completely not satisfying the requirements of the start-stop supervisory of the turbo-generator set of the nuclear power plant and the fast failure intervention, thus affecting the operational performance of the power station. A digital control system (DCS) of the prior art is known from patent document CN 101 149 992 A.

### Summary of the Present Invention

The technical problem to be solved by the information processing method of the digital control system of the nuclear power units of the present invention is the problem of limited view and low execution efficiency with the overall program of the existing nuclear power units, so as to give full play to the advantages of DCS on the information processing.

The examples of the present invention are given as follows:
an information processing method of digital control systems of nuclear power units, characterized in that the method comprises the following steps:
outputting through a main program body a task information, as well as a digital operational list information and a supporting interface information corresponding to the task information, and searching for a digital operational list corresponding to a specified task according to the main program body;
outputting task details, device information to which the task details correspond, and task link information through the found digital operational list;
the digital operational list sends a link instruction to a supporting interface, and the supporting interface that receives the link instruction outputs cross-system supervisory parameters and operating instructions;
characterized in that
the method further comprises the following steps before the step of outputting through the main program body the task information, as well as the digital operational list information and the supporting interface information corresponding to the task information, and searching for the digital operational list corresponding to the specified task according to the main program body:
   isolating related operations of a master control room from paper-based regulations, and generating the main program body according to contents in the paper-based regulations after isolating the related operations of the master control room; and
   according to different targets and tasks, generating the digital operational list corresponding to the tasks from the related operations of the master control room isolated from the paper-based regulations.

The present invention has the following beneficial effects compared with the prior art: Clearly displaying the execution sequence and logical relation of the operational state information of the units in the process of start-stop of the nuclear power units, overcoming the defect of DCS in visuality, improving the operational efficiency of the overall program of the nuclear power units, and giving full play to the advantages of DCS on the information processing.

### Brief Description of the Drawings

Fig. 1 is a structured flowchart of the digital system of the overall program of the nuclear power units provided by the examples of the present invention;
Fig. 2 is an exemplary diagram of the main program body provided by the examples of the present invention;
Fig. 3 is an exemplary diagram of the digital operational list of manually lifting the control rod provided by the examples of the present invention;
Fig. 4 is a structured flowchart of the first loop water pressure test control unit provided by the examples of the present invention;
Fig. 5 is an exemplary diagram of the first loop water pressure test control interface provided by the examples of the present invention;
Fig. 6 is a structured flowchart of the turbine start-stop control unit provided by the examples of the present invention;
Figs. 7 and 8 are exemplary diagrams of the turbine start-stop control tracking interface provided by the examples of the present invention;
Fig. 9 is a specific structured flowchart of the structural navigation unit provided by the examples of the present invention;
Fig. 10 is an exemplary diagram of the interface effect of the first display device provided by the examples of the present invention;
Fig. 11 is an exemplary diagram of the display interface of the second display device to which the subprogram D10 corresponds that is provided by the examples of the present invention;
Fig. 12 is an exemplary diagram of the display interface of the second display device to which the subprogram 15 corresponds that is provided by the examples of the present invention;
Fig. 13 is a flowchart of the digital method of the overall program of the nuclear power units provided by the examples of the present invention;
Fig. 14 is a flowchart of the digital control of the first loop water pressure test of the PWR nuclear power plant realized through the control interface of the first loop water pressure test provided by the examples of the present invention;
Fig. 15 is a flowchart of the digital control of the first loop water pressure test of the PWR nuclear power plant realized through the control interface of the first loop water pressure test provided by another example of the present invention;
Fig. 16 is a flowchart of the start-stop control of the turbo-generator set of the nuclear power plant realized through the turbine start-stop control tracking interface provided by the examples of the present invention;
Fig. 17 is a flowchart of the start-stop control of the turbo-generator set of the nuclear power plant realized through the turbine start-stop control tracking interface provided by another example of the present invention; and
Fig. 18 is a flowchart provided by the examples of the present invention where the digital system of the overall program of the nuclear power units is entered through the structural navigation unit.

### Detailed Description

For making the purpose, technical solution and advantages of the present invention clearer, the present invention will further be described below in detail with reference to appended drawings and examples. It should be understood that the specific examples described here are only used for explaining instead of limiting the present invention.

In the examples of the present invention, through digital structured processing of the overall program of the nuclear power units and establishment of the mutual link relation among the plurality of modules obtained after digitization, the defect of DCS in visuality is overcome, and the operational efficiency of the overall program of the nuclear power units is improved, making it satisfy the requirements of the fast intervention.

### Example 1:

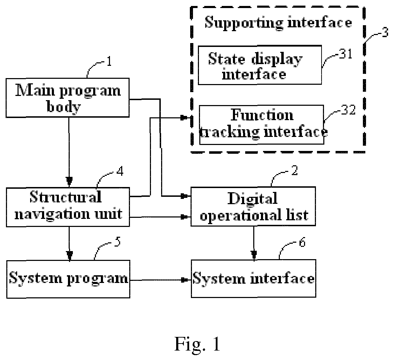

Fig. 1 shows the structure of the information processing device of the digital control system of the nuclear power units which may be used with the present invention, with only the part related with the examples of the present invention shown for facilitating explanation.

This device, be able to used in the DCS system, can be either a software unit, a hardware unit or a software-hardware unit running in the DCS system, or an independent pendant to be integrated into the DCS system or to run in the application system of the DCS system. The DCS system refers to a system in the nuclear power plant used for controlling operation of all the devices included in the entire nuclear power plant, comprising an overall program, a system program and a failure running program, etc.. The information processing device of the digital control system of the nuclear power units includes a main program body 1, a digital operational list 2 and a supporting interface 3, wherein:
the main program body 1 is used for outputting the task information, as well as the digital operational list information and supporting interface information corresponding to the task information, and, while the specified task needs to be performed, searching for the digital operational list to which the specified task corresponds according to the task information outputted by the main program body 1 and the digital operational list information to which the task information corresponds.

In the examples of the present invention, through separation of the related operation of the master control room out of the paper-based regulations, the contents of the paper-based regulations after the separation of the related operation of the master control room are used as the main program body, which is used for outputting the task information, as well as the digital operational list information and supporting interface information corresponding to the task information. Wherein the related operation of the master control room refers to the related operation performed through the master control room for starting, stopping, supervisory, regulating and controlling the devices that are distributed on spot everywhere in the power plant, with operating, controlling and supervisory of the devices centralized in the master control room. The related operation of the master control room includes but is unlimited to such operations as remote start, stop, supervision, regulation and control of the related devices performed by the master control room.

In the examples of the present invention, since the main program body outputs the task information, as well as the digital operational list information and supporting interface information corresponding to the task information, a user, when needing to execute a certain task, can then search for the digital operational list to which the task corresponds through the task information, as well as the digital operational list information corresponding to the task information outputted by the main program body.

Wherein the main program body can be presented through either a paper-based medium or an electronic medium, with for the latter a man-machine interactive interface being used for presenting. In another example of the present invention, the main program body is also used for outputting the remark information of the main program body.

Wherein the task information refers to the tasks and targets involved in the start-stop control process of the nuclear power units as well as the logical relation among the individual tasks, e.g. the task information can be manually lifting the control rod, stabilizing the first loop mean temperature, etc., but not limited to this example.

The digital operational list information corresponding to the task information refers to the information of the digital operational list set for completing the task. In the examples of the present invention, the digital operational list information corresponding to the task information can be the name, code, etc. of the digital operational list.

The supporting interface information corresponding to the task information refers to the interface supporting the overall program that is set for completing the task. In the examples of the present invention, the supporting interface information corresponding to the task information can be the name, code, etc. of the supporting interface. Wherein the supporting interface includes but is unlimited to the state display interface, the function tracking interface, etc..

In actual application, the main program body can be divided into a plurality of bars, such as an operation/check bar, a mark bar, a location bar and a remark bar.

Wherein the task information is outputted through the operation/check bar, and the task execution situation is recorded with the task completion mark. Wherein the task completion mark can be in the form of a selection box, etc.; when the selection box is selected, the task is indicated to have been completed, and when the selection box is not selected, the task is indicated to not have been completed.

The digital operational list information corresponding to the task information is outputted through the mark bar; for example, the code of the digital operational list corresponding to the task information can be outputted, and the corresponding digital operational list can be found quickly and accurately according to the code of the digital operational list, or a link instruction is sent quickly and accurately to the corresponding digital operational list, so as to link to the corresponding digital operational list. In the examples of the present invention, when a certain task in the main program body is simple and thus no digital operational list needs to be set for this task, the mark bar further outputs the device information to which the task corresponds, with the device information possible to be the code of the device, etc.; here in order to distinguish the digital operational list information from the device information, an underline can be added to the digital operational list information.

The supporting interface information corresponding to the task information is outputted through the location bar, e.g. the code of the supporting interface corresponding to the task information can be outputted; the corresponding supporting interface can be found quickly and accurately according to the code of the supporting interface, or a link instruction is sent quickly and accurately to the corresponding supporting interface, so as to link to the corresponding supporting interface. In the examples of the present invention, when a certain task in the main program body is complicated and thus the digital operational list is set for this task, the digital operational list can be used for linking to the supporting interface, with the supporting interface corresponding to the task information not necessary to be outputted in the main program body; here the location bar further outputs the room number or location coordinate information of the device to which the task corresponds; here in order to distinguish between the room number or location coordinate information of the supporting interface information and the device, an underline can be added to the supporting interface information.

The remark information is outputted through the remark bar. Wherein the remark information refers to the non-instruction contents that need to be written into the program, such as notes, illustration, explanation, labels, information, and data, so as to keep the operating instructions on the layout clear and explicit.

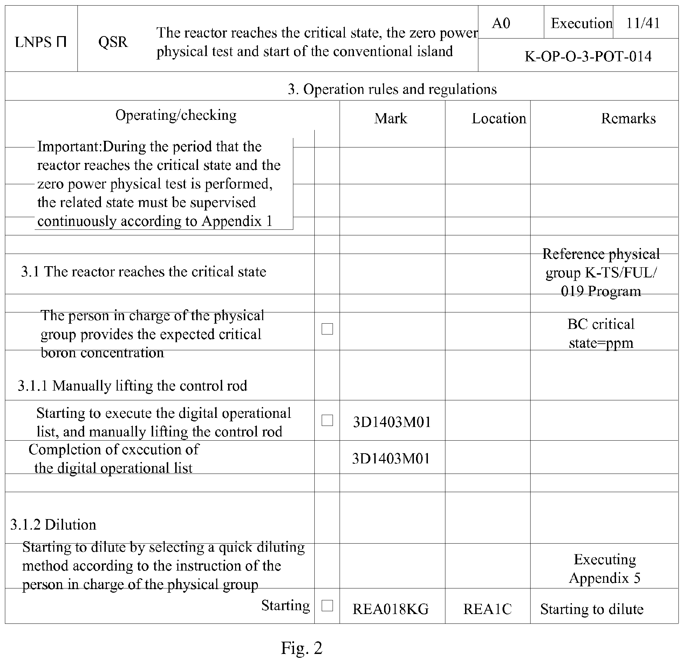

Fig. 2 is an exemplary diagram of the main program body provided by the examples of the present invention, but the present invention is not limited to the exemplary diagram. In the main program body as shown in Fig. 2, the task information is outputted through the operation/check bar, and the logical relation between the individual task information is indicated through a serial number; meanwhile a corresponding task completion mark is set for the individual task information, so as to mark whether the task has been completed; for example, a selection box is set for marking whether the task has been completed, and this selection box will be checked if the task is completed, otherwise not checked.

In the examples of the present invention, the related operation of the master control room is isolated from the existing paper-based regulations, and the main program body is generated according to the paper-based program after the isolation and used for outputting the task information, as well as the digital operational list information and the supporting interface information corresponding to the task information, such that an operator can be more visual and quick to learn the logical structure of the overall program of the nuclear power units through the main program body, so as to facilitate start-stop control of the nuclear power units.

The digital operational list 2 outputs the task details, the device information to which the task details correspond, and the task link information.

In the examples of the present invention, after the related operations of the master control room are isolated from paper-based regulations, according to different targets and tasks, the digital operational list corresponding to the tasks is generated from the isolated related operations of the master control room, and the digital operational list outputs the task details, the device information to which the task details correspond, and the task link information. In another example of the present invention, the digital operational list further outputs the operational list remark information.

The digital operational list is not a simple combination of the related operations of the master control room; instead, according to different targets and tasks, the isolated related operations of the master control room are decomposed, such that the digital operational list corresponding to different targets and tasks can be generated. The task information of manually lifting the control rod outputted by the main program body as shown in Fig. 2 decomposes the isolated related operation of the master control room corresponding to the task of manually lifting the control rod, so as to generate the digital operational list of manually lifting the control rod. For other task information outputted by the main program body, the corresponding digital operational list can also be generated according to the same principle. Certainly, for the simple task, the task information can be outputted directly through the main program body, with the corresponding digital operational list not necessary to be generated for the task information.

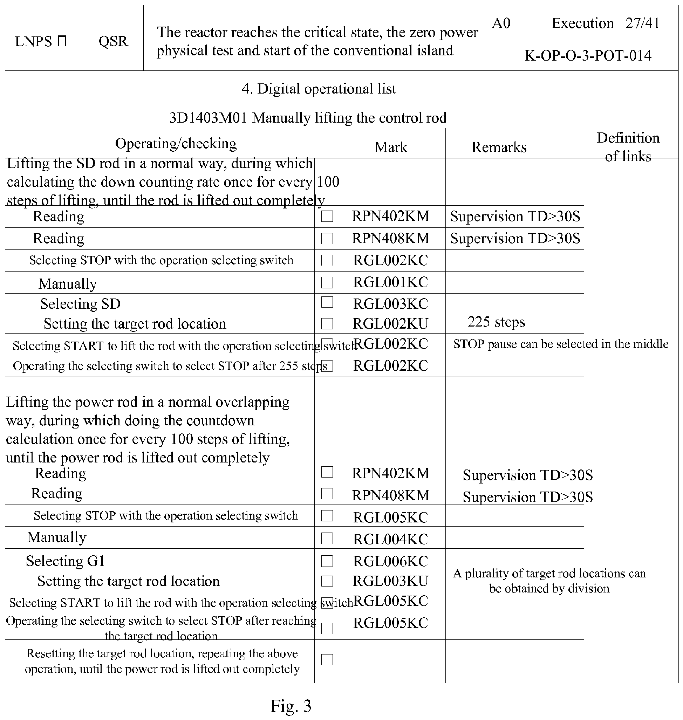

Fig. 3 is an exemplary diagram of a digital operational list-manually lifting the control rod, whose task is to manually lift the control rod, so as to lift all the control rods out of the reactor core, with all the operating instructions involved related to the lifting control rod.

Again, taking the digital operational list for example that is used for stabilizing the first loop mean temperature, its task is to stabilize the first loop mean temperature (± 0.5°C) in the range from 293.4 °C to 290.4 °C, with the operating instructions involved including reading the first loop mean temperature and controlling various means affecting the temperature, thereby stabilizing the first loop mean temperature.

Wherein the task details refer to the detailed operating instructions used for completing the tasks to which the digital operational list corresponds, the logical relation between individual instructions, and the completion information of the individual instructions, i.e. the task details refer to the detailed completion steps of the tasks to which the digital operational list corresponds, and can also be called a subtask of the tasks.

The device information to which the task details correspond refers to the corresponding device information used for completing the individual detailed operating instructions to which the task corresponds, i.e. the device information to which the detailed operating instructions correspond.

The task link information refers to the interface information that can be linked through the digital operational list and used for completing a certain detailed task. The task link information includes but is unlimited to the interface information used for completing a certain detailed task and a first link button. Wherein the first link button can call and be linked to the interface to which the interface information corresponds, with the interface to which the first link button can be linked includes but is unlimited to a process system control display interface, a function tracking interface, or a state display interface, etc.. The interface information used for completing a certain detailed task is an interface mark to which the first link button can be linked, which can be interface name, interface code, etc.. In the examples of the present invention, the interface information to be linked to can be outputted with the first link button.

In actual application, the digital operational list can be divided into a plurality of bars, such as an operation/check bar, a mark bar, a link bar and a remark bar.

Wherein the operation/check bar outputs the task details, and the subtask completion mark records the subtask execution situation. Wherein the task details refer to the operating instructions of the detailed steps used for completing the task. The subtask mark can adopt a selection box or other forms; for example, when the selection box is checked, the subtask is indicated to have been completed, and when the selection box is not checked, the subtask is indicated to not have been completed.

The mark bar outputs the device information to which the task details correspond, i.e. the device information used for executing the subtask; for example, the code of the device corresponding to the task details can be outputted, and the corresponding device can be found quickly and accurately according to the code of the device, so as to execute the operating instructions in the task details for the device.

The remark bar outputs the remark information. Wherein the remark information refers to the non-instruction contents written into the program, such as notes, illustration, explanation, labels and information.

The link bar outputs the task link information.

In the digital program, an operator gives instructions through the process system control display interface, and here an operator can enter the corresponding process system control display interface through the link information in the digital operational list. Besides, an operator can also invoke other digital system operational program or designed state display interface through the link definition information.

In the paper-based system running program, the first link button is represented by an arrowed box, in which the screen or the code of the program to be linked to is marked. Wherein the code of the interface, used uniquely for marking the interface, can adopt either any method provided by the prior art, or the following coding method provided by the examples of the present invention:
The process system control display interface has the following coding method: units No. + system No. + serial No. + YCD, such as 3RCV001YCD; and
the state display interface has the following coding method: units No. + system No. + serial No. + YST, such as 3RCV001YST.

Fig. 3 is an exemplary diagram of the digital operational list of manually lifting the control rod provided by the examples of the present invention, but the present invention is not limited to the exemplary diagram. In Fig. 3, the operation/check bar outputs the detailed step information of this task of manually lifting the control rod (i.e. the task outputted in the main program body as shown in Fig. 2 - manually lifting the control rod), the logical sequence of the individual detailed steps, and the execution situation of the individual detailed steps. The mark bar outputs the device information to which the task details correspond. The link bar outputs the link information; for example, the digital operational list of manually lifting the control rod can be used for linking to various control interfaces, e.g. such control interfaces as with the interface serial Nos. RPN002YCD, RGL002YCD, RPN002YCD, and RGL004YCD.

In the examples of the present invention, because the main program body and the digital operational list are generated directly by isolating the related operations of the master control room in the paper-based program, the form and contents of the existing paper-based program are not changed greatly, thus reducing workload of the digital structure design of the overall program of the nuclear power units, and writing, conversion and execution of the program are not easy to have a mistake, thereby lowering the risk caused by digitalization of the overall program of the nuclear power units.

In the examples of the present invention, with a plurality of digital operational lists, in order to distinguish the individual digital operational lists, the digital operational list code is set for the individual digital operational lists so as to uniquely mark the digital operational list. Wherein the digital operational list code can in principle adopt either any method provided by the prior art, or the following coding method provided by the examples of the present invention: program code + 2-digit chapter code + M + 2-digit sequence code, e.g. 3D0903M01, which indicates that the digital operational list is the first digital operational list of Chapter 3 of the program 3D9. For marking the individual digital operational lists more clearly, in the examples of the present invention, the individual digital operational lists are named with brief Chinese according to work contents or purposes of the digital operational list.

The supporting interface 3 is used for outputting the cross-system supervisory parameter and operating tasks.

In the examples of the present invention, the supporting interface 3 is a running task-oriented interface supporting the overall program of the nuclear power units, through which the cross-system supervisory and operation can be realized. The cross-system supervisory and operation are usually met at a certain stage and a certain state of start or stop of the units; if the system interface included in the system program is directly used, an operator has to frequently switch the interfaces, which has a low execution efficiency and is disadvantageous to quick intervention; therefore, the design of the cross-system interface needs to be running task-oriented and support the overall program, so as to facilitate operation and overcome the shortcoming of DCS in visuality.

Wherein the supporting interface 3 includes but is unlimited to the state display interface 31 and the function tracking interface 32. In the examples of the present invention, according to different running tasks, one or more state display interfaces 31 and one or more function tracking interfaces 32 can be constructed.

Wherein the state display interface 31 is used for supervising the important parameters, the states of important devices, the signs of accidents, and the accident conditions. In the examples of the present invention, the trend tracking mode is used to supervise the conversed important parameters, and the value display mode is used to supervise the unchanged important parameters. All the individual state display interfaces 31 can call and be linked to the interface related to the supervisory parameters in accordance with the interface design specifications.

According to the normal operational state analysis and running experience, the constructed state display interface 31 includes but is unlimited to a Reactor Completely Discharged display interface, a refueling cold shutdown display interface, a maintaining cold shutdown display interface, a normal shutdown mode display interface cooled by a residual heat removal system, a residual heat removal system isolation state display interface, a Reactor in Power display interface, a second loop state supervisory display interface, an alarm state supervisory display interface important for units' safety during an overhaul shutdown period, etc..

The function tracking interface 32 is used for tracking the operating device and the required supervisory parameter of the preset stage or the preset comprehensive operation. According to the normal operational state analysis and running experience, the constructed function tracking interface 32 includes but is unlimited to an evaporator water level control and tracking interface, a first loop water pressure test control interface, a second loop water-loop start-stop tracking interface, an auxiliary power switch tracking interface, a turbine start-stop control tracking interface, etc.. In the examples of the present invention, the main program body is used for outputting the task information, as well as the digital operational list information and the supporting interface information corresponding to the task information, thus the digital operational list information and/or the supporting interface information needed for completing the tasks outputted by the main program body can be found quickly and accurately through the main program body; the found digital operational list can be used for outputting the task details, the device information to which the task details correspond, and the link information, and thus running of the nuclear power units can be quickly and accurately controlled; or the digital operational list can be used for linking to the supporting screen, and thus running of the nuclear power units can be controlled.

Because the main program body from which the digital operational list is isolated lacks clear logical relation. Therefore, in order to provide for an operator with clear logical relation of the overall program of the nuclear power units, in another example of the present invention, the information processing device of the digital control system of the nuclear power units further includes a structural navigation unit 4. The structural navigation unit 4 is used for outputting the logical structure information of the overall program of the nuclear power units. The structural navigation information is constructed according to the logical structure of the overall program of the nuclear power units, which is described through the structural navigation unit 4, so as to help an operator establish the whole view of the overall program of the nuclear power units. Wherein the structural navigation unit can be in the form of HTML.

In another example of the present invention, the structural navigation unit 4 can be used for calling and linking to the digital operational list 2 and/or the supporting interface 3. In another example of the present invention, the structural navigation unit 4 can also be used for linking to the system program 5 and the system interface 6 included in the system program. Because the structural navigation unit 4 can be used for linking to the digital operational list 2 and/or the supporting interface 3, and even for linking to the system program 5 and the system interface 6 included in the system program, so as to help an operator operate and control the execution efficiency of the overall program of the nuclear power units in the DCS control room having a limited view and give full play to the advantages of DCS.

The system program 5 and the system interface 6 are the system program and the system interface in the overall program of the existing nuclear power units, and will thus not be described here in detail.

In another example of the present invention, the information processing device of the digital control system of the nuclear power units further includes a first loop water pressure test control unit (not shown in the drawing) and a turbine start-stop control unit (not shown in the drawing).

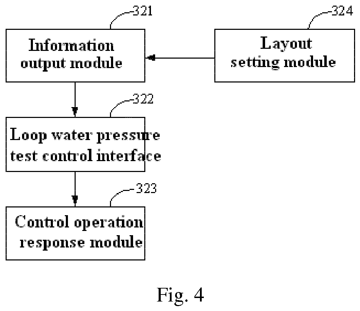

Wherein the first loop water pressure test control unit realizes the digital control of the first loop water pressure test of the PWR nuclear power plant through the first loop water pressure test control interface. Its specific structure is as shown in Fig. 4, and will thus not be described here in detail.

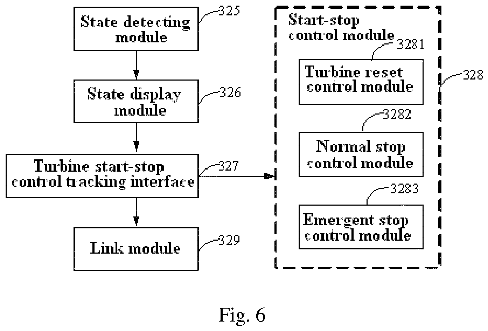

The turbine start-stop control unit realizes the start-stop control of the turbo-generator set of the nuclear power plant through the turbine start-stop control tracking interface. Its specific structure is as shown in Fig. 6, and will thus not be described here in detail.

### Example 2:

Fig. 4 shows the structure of the first loop water pressure test control unit provided by Example 2 of the present invention, wherein only the parts related to the examples of the present invention are shown for facilitating explanation. Wherein:
The information output module 321 displays the key parameters, the control operation entry and the important alarms related to the first loop water pressure test on one and the same man-machine interactive interface (for facilitating explanation, hereinafter the man-machine interactive interface is referred to as the first loop water pressure test control interface 322).

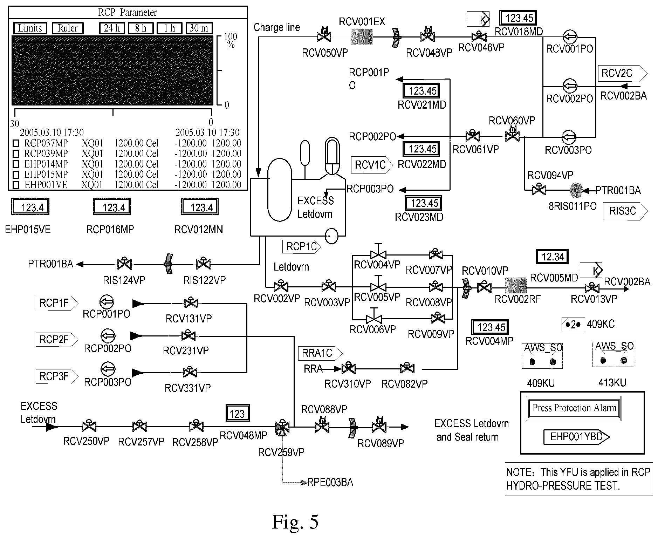

Fig. 5 shows an example of the first loop water pressure test control interface provided by the examples of the present invention.

Wherein the key parameters related to the first loop water pressure test include but are unlimited to the following parameters:
A first loop pressure normal measurement wide-range channel (e.g. RCP037MP and RCP039MP as shown in Fig. 5);
a water pressure test dedicated first loop pressure wide/narrow-range measurement channel (e.g. EHP014MP and EHP015MP as shown in Fig. 5);
a capacity control tank water level (e.g. RCV011MN and RCV012MN as shown in Fig. 5);
a first loop weighted average temperature (e.g. EHP001VE as shown in Fig. 5);
a first loop pressure change rate (e.g. EHP015VE as shown in Fig. 5), wherein the pressure change rate is obtained by calculation according to the water pressure test dedicated first loop pressure wide-range measurement channel;
a charging flow (e.g. RCV018MD as shown in Fig. 5);
a discharging flow (e.g. RCV005MD as shown in Fig. 5);
a discharging pressure (e.g. RCV004MP as shown in Fig. 5);
a main pump gland steam sealing infusing flow (e.g. RCV021MD, RCV022MD and RCV023MD as shown in Fig. 5); and
an excess discharging pressure (e.g. RCV048MP as shown in Fig. 5), etc..

In the examples of the present invention, the first loop pressure normal measurement wide-range channel is displayed on the first loop water pressure test control interface by tracking trend, such that an operator can not only read the digital pressure directly, but also visually watch how fast the pressure changes, and compares it with the pressure change rate, so as to adjust the boost or depressurization rate in time. The multi-point pressure display is easy for an operator to find a single instrument failure if there is any and limit its consequences. The capacity control tank water level is displayed on the first loop water pressure test control interface by tracking the parameters and trends simultaneously; the trend tracking method enables an operator not only to read the digits of the capacity control tank water level directly, but also to visually watch the water level change; the abnormal change of the water level can make an operator discover the possible abnormality and fluid discharge of the first loop in time, with the water level of the trend tracking allowed to be compared with the water level displayed by digits, so as to find a single instrument failure and limit its consequences.

Wherein the control operation entry related to the first loop water pressure test includes a control operation entry of the device and a pressure remote control operation entry.

Wherein the control operation entry of the device includes but is unlimited to the following members:
A first loop main pump (e.g. RCP001PO, RCP002PO and RCP003PO as shown in Fig. 5);
a charging pump (e.g. RCVOOIPO, RCV002PO and RCV003PO as shown in Fig. 5);
a water pressure test pump (e.g. 8RIS011PO as shown in Fig. 5);
a charging loop and a valve thereof (e.g. RCV046VP, RCV048VP and RCV050VP as shown in Fig. 5);
a discharging loop (e.g. RCV002VP, RCV003VP, RCV004VP, RCV005VP, RCV006VP, RCV007VP, RCV008VP, RCV009VP, RCV010VP, RCV013VP, RCV310VP and RCV082VP as shown in Fig. 5);
a main pump gland steam sealing infusing loop (e.g. RCV060VP, RCV061VP and RCV094VP as shown in Fig. 5);
an excess discharging and main pump gland steam sealing reflux loop (e.g. RCV250VP, RCV257VP, RCV258VP, RCV259VP, RCV131VP, RCV231VP, RCV331VP, RCV088VP and RCV089VP as shown in Fig. 5); and
a pressure protection loop (e.g. RIS121VP and RIS124VP as shown in Fig. 5).

Wherein the pressure remote control operation entry includes but is unlimited to the following operations: a boost and depressurization operation, a stabilizing pressure operation, isolating or commissioning a discharging orifice plate, isolating or commissioning charge and discharge, infusing control pressure with the excess discharging and main pump gland steam sealing, and maintaining a stable-pressure operation under abnormal circumstances.

Wherein the first loop water pressure test control interface 322 is a man-machine interactive interface, which is used for displaying the key parameters, the control operation entry and the important alarms related to the first loop water pressure test of the PWR nuclear power plant, and for detecting the operating instructions inputted by the user.

The control operation response module 323, according to the key parameters displayed on the first loop water pressure test control interface 322, performs the corresponding control operation on the process of the first loop water pressure test directly through the control operation entry displayed on the first loop water pressure test control interface 322.

In the examples of the present invention, when the process of the first loop water pressure test needs to be controlled, an operator can control the process of the first loop water pressure test directly through the control operation entry displayed on the first loop water pressure test control interface according to the key parameters related to the first loop water pressure test or the specific process of the water pressure test displayed on the first loop water pressure test control interface as well as the water pressure test operational program.

In another example of the present invention, the first loop water pressure test control unit further includes a layout setting module 324. The layout setting module 324 is used for setting the layout of the key parameters, the control operation entries and the important alarms related to the first loop water pressure test in the first loop water pressure test control interface 322. Here the information output module 321 displays the key parameters, the control operation entries and the important alarms related to the first loop water pressure test on the first loop water pressure test control interface 322 according to the set layout.

In the examples of the present invention, because of the limited display area of the first loop water pressure test control interface, in order to make the key parameters, the control operation entry and the important alarms related to the first loop water pressure test displayed more clearly and visually on the first loop water pressure test control interface, so as to facilitate fast control and interference of the water pressure test process by the user, the layout setting module 324 is used for presetting the layout of the key parameters, the control operation entries and the important alarms related to the first loop water pressure test in the first loop water pressure test control interface.

### Example 3:

Fig. 6 shows the structure of the turbine start-stop control unit provided by the examples of the present invention, wherein only the parts related to the examples of the present invention are shown for facilitating explanation. Wherein:
the state detecting module 325 detects the operational state and operational parameters of the turbo-generator set, the operational state and operational parameters of the auxiliary system of the turbo-generator set, and the failure information appearing during running of the turbo-generator set.

In the examples of the present invention, while the operational state and operational parameters of the turbo-generator set are detected, because the turbo-generator set includes various operational devices, the operational state and operational parameters of the individual operational devices included in the turbo-generator set need to be detected during the detection; for facilitating explanation, they are hereinafter directly referred to as the operational state and operational parameters of the turbo-generator set.

In the examples of the present invention, the state detecting module 325 detects through a sensor the operational state and operational parameters of the turbo-generator set, the operational state and operational parameters of the auxiliary system of the turbo-generator set, and the failure information appearing during running of the turbo-generator set.

In another example of the present invention, in order to make continuous real-time tracking of the failure information appearing during running of the turbo-generator set of the nuclear power plant, the auxiliary system of the turbo-generator set, and the turbo-generator set, a redundant detection method can be used for the sensors used in the individual devices; that is, a plurality of sensors are provided for individual running devices in the turbo-generator set and individual devices in the auxiliary system of the turbo-generator set; when a sensor fails in the process of running of the nuclear power plant, other redundant sensors can be used for work in time, thus making continuous detection of the failure information appearing during running of the turbo-generator set of the nuclear power plant, the auxiliary system of the turbo-generator set, and the turbo-generator set.

Because the turbo-generator set in the nuclear power plant and the individual devices in the auxiliary system of the turbo-generator set may be dispersedly distributed in the physical location, while the individual data detected above need to be referenced during the start-stop control of the turbo-generator set, in the examples of the present invention, the data read by the individual sensors can be sent to the control centre through the hard wire or network, etc., and the individual detected data are centralizedly and unifiedly processed by the control centre.

Wherein the operational state of the turbo-generator set includes the turbo-generator set completely stopping (the rotational speed is 0), the turbo-generator set jacking and turning state (the rotational speed is 8 r/m), the turbo-generator set starting (the rotational speed is 8-1500 r/m), the turbo-generator set being grid-connected for running, the turbo-generator set running with auxiliary power, and the turbo-generator set being split and stopped (the rotational speed is 1500-8 r/m), with the operational state of the turbo-generator set characterized by such parameters as the rotational speed, the load switch state and the generator power.

The operational parameters of the turbo-generator set include but are unlimited to the rotational speed of the turbo-generator set, the load switch state, the generator power, the generator voltage, the exciter current, the turbine high-pressure cylinder regulating valve and the stop valve state, the turbine cylinder regulating valve and the stop valve state, as well as the turbo-generator set vibration, etc..

The operational state of the auxiliary system of the turbo-generator set refers to the states of the turbine lubricant (GGR) pump, the jacking and turning motor, and the generator seal oil (GHE) pump, including the start or stop state, which are directly displayed on the function tracking screen.

The operational parameters of the auxiliary system of the turbo-generator set include but are unlimited to the turbine lubricant (GGR) oil pressure, the generator seal oil (GHE) pressure, the hydrogen pressure and temperature within the generator, the condenser vacuum and the turbine gland steam sealing pressure, etc..

The failure information appearing in running of the turbo-generator set refers to the vibration and inflation abnormal signals in the process of start-stop of the turbo-generator set.

In another example of the present invention, in order to make continuous real-time tracking of the failure information appearing during running of the turbo-generator set of the nuclear power plant, the auxiliary system of the turbo-generator set, and the turbo-generator set, the state detecting module 325 provides a plurality of sensors for the individual operational devices of the turbo-generator set of the nuclear power plant and the auxiliary system of the turbo-generator set; when a sensor fails in the process of running of the nuclear power plant, other redundant sensors can be used for work in time, thus making continuous detection of the failure information appearing during running of the turbo-generator set of the nuclear power plant, the auxiliary system of the turbo-generator set, and the turbo-generator set.

Because the turbo-generator set in the nuclear power plant and the individual devices in the auxiliary system of the turbo-generator set may be dispersedly distributed in the physical location, while the individual data detected above need to be referenced during the start-stop control of the turbo-generator set. Therefore, in the examples of the present invention, the data read by the individual sensors can be sent to the control centre through the hard wire or network, etc., and the individual detected data are centralizedly and unifiedly processed by the control centre.

The state display module 326 centralizedly displays the detected operational state and operational parameters of the turbo-generator set, the operational state and operational parameters of an auxiliary system of the turbo-generator set, and the failure information appearing during running of the turbo-generator set on one and the same man-machine interactive interface (for facilitating explanation, the man-machine interactive interface hereinafter is referred to as the turbine start-stop control tracking interface 327).

In the examples of the present invention, the turbine start-stop control tracking interface 327 is provided for centralizedly displaying the detected operational state and operational parameters of the turbo-generator set, the operational state and operational parameters of the auxiliary system of the turbo-generator set, and the failure information appearing during running of the turbo-generator set. The turbine start-stop control tracking interface 327 includes a turbo-generator set state display area, an auxiliary system state display area, and a turbo-generator set failure information display area.

Wherein the turbo-generator set state display area is used for displaying the detected operational state and operational parameters of the turbo-generator set; the auxiliary system state display area is used for displaying the operational state and operational parameters of the auxiliary system of the turbo-generator set; and the turbo-generator set failure information display area is used for displaying the failure information appearing during running of the turbo-generator set. It can be understood that for facilitating distinguishment, the turbo-generator set state display area, the auxiliary system state display area, and the turbo-generator set failure information display area included in the function tracking interface can cross or overlap each other.

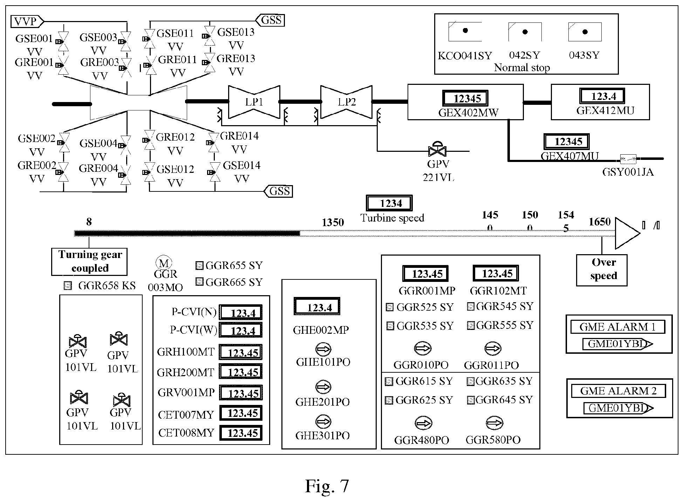

Fig. 7 is an exemplary diagram of the turbine start-stop control tracking interface 327 provided by the example of the present invention, but the specific form of the turbine start-stop control tracking interface 327 is unlimited to this exemplary diagram.

The start-stop control module 328 is used for directly controlling start-stop of the turbo-generator set according to the detected operational state and operational parameters of the turbo-generator set, the operational state and operational parameters of the auxiliary system of the turbo-generator set, and the failure information appearing during running of the turbo-generator set displayed on the turbine start-stop control tracking interface 327.

In the examples of the present invention, a normal stop turbine button KCO041/042/043SY is set directly on the turbine start-stop control tracking interface 327, and allows the direct turbine stop processing; a reset link button (also referred to as a reset entry) is provided on the turbine start-stop control tracking interface 327, and allows linking to the GSE system interface, through which the reset control is performed on the turbo-generator set. When it is determined according to the operational state and operational parameters of the turbo-generator set, the operational state and operational parameters of the auxiliary system of the turbo-generator set, and the turbo-generator set failure information displayed on the turbine start-stop control tracking interface 327 that the turbo-generator set needs the emergent stop control, the turbo-generator set can undergo the emergent stop control through a hard-wired button.

The start-stop control module 328 includes a turbine start control module 3281, a normal stop control module 3282, and an emergent stop control module 3283. Wherein:
the turbine start control module 3281 has the following specific workflow:
1) invoking the start-stop function tracking screen;
2) the start-stop function tracking screen enters the turbine protection system interface, and the turbine protection device is reset;
3) entering the turbine regulating system interface, and issuing a start command;
4) supervisory on the start-stop function tracking screen:
   inspecting that the rotational speed of the turbine starts to rise from 8 rpm;
   the following inspections are executed during the speed increasing period of the turbine: vibration (GME), differential expansion (GME), seal oil pressure GHE002MP, and lubricant mother pipe pressure GGR001MP;
5) the following inspection will be executed on the start-stop function tracking screen when the rotational speed of the turbine rises over 1350 rpm:
   checking stop of the electric jacking and turning motor GGR003MO;
6) the following inspection will be executed when the rotational speed of the turbine rises to about 1500 rpm:
   inspecting the lubricant temperature GGR102MT;
   inspecting whether the exit pressure of the main oil pump GGR001MP is constantly close to 1.5 bar (gauge pressure), and stopping the AC lubricant pump GGR010PO;
   manually stopping the selected jacking oil pump GGR480PO or GGR580PO;
7) entering the Grid Synchronization and Connection (GSY) screen, and putting into operation the automatic synchronization function; after the synchronization conditions are satisfied, grid-connection will be performed automatically and synchronously; and
8) being grid-connected and rising to the required load and running.

The normal stop control module 3282 has the following specific workflow:
1) invoking the start-stop function tracking screen;
2) the start-stop function tracking screen enters the turbine regulating system interface, a load-reduction instruction is given, and the turbine starts to reduce the load;
3) supervisory on the start-stop function tracking screen:
   when the load is 30%, the steam trap valves GPV 101 VL, GPV 111 VL, GPV 121 VL and GPV 131 VL are opened automatically;
   when the load is 20% FP, the last stage blade spray system is put into operation, and GPV 221 VL is opened automatically;
4) when the load is 10%, entering the turbine regulating system interface for giving the quick-power-reduction command; when the load is less than 5%, using KCO041SY, KCO042SY or KCO043SY to give the stop command on the start-stop function tracking screen;
5) supervisory on the start-stop function tracking screen:
   inspecting whether the generator load switch GSY001JA is off;
   checking whether all the turbine valves GSE 001 VV, GSE 002 VV, GSE 003 VV, GSE 004 VV, GSE 011 VV, GSE 012 VV, GSE 013 VV, GSE 014 VV, GRE 001 VV, GRE 002 VV, GRE 003 VV, GRE 004 VV, GRE 011 VV, GRE 012 VV, GRE 013 VV, and GRE 014 VV have been closed;
   checking whether the rotational speed of the turbine has been reduced from 1500 rpm;
   inspecting whether the lubricant pump GGR010PO has been started automatically; start the lubricant pump GGR010PO immediately if it is not started, and start the DC lubricant pump GGR011PO immediately if GGR010PO cannot be started;
   inspecting whether the jacking oil pump GGR480PO or GGR580PO has been started;
   when the rotational speed of the turbine is reduced to 1350 rpm, checking whether the electric jacking and turning device GGR003MO has been started automatically;
   when the rotational speed of the turbine is reduced to 8 rpm, the rotational speed of the turbine is kept by the jacking and turning device at 8 rpm; and
   the main stop steps are over.

The emergent stop control module 3283 has the following main workflow:
the turbine automatic protection trip or emergent stop through a hard button;
invoking the start-stop function tracking screen, and supervisory on the start-stop function tracking screen:
   inspecting whether the generator load switch GSY001JA is off;
   checking whether all the turbine valves GSE 001 VV, GSE 002 VV, GSE 003 VV, GSE 004 VV, GSE 011 VV, GSE 012 VV, GSE 013 VV, GSE 014 VV, GRE 001 VV, GRE 002 VV, GRE 003 VV, GRE 004 VV, GRE 011 VV, GRE 012 VV, GRE 013 VV, and GRE 014 VV have been closed;
   checking whether the rotational speed of the turbine has been reduced from 1500 rpm;
   the steam trap valves GPV 101 VL, GPV 111 VL, GPV 121 VL and GPV 131 VL are opened automatically;
   the last stage blade spray system is put into operation, and GPV 221 VL is opened automatically;
   inspecting whether the lubricant pump GGR010PO has been started automatically; start the lubricant pump GGR010PO immediately if it is not started, and start the DC lubricant pump GGR011PO immediately if GGR010PO cannot be started;
   inspecting whether the jacking oil pump GGR480PO or GGR580PO has been started;
   when the rotational speed of the turbine is reduced to 1350 rpm, checking whether the electric jacking and turning device GGR003MO has been started automatically;
   when the rotational speed of the turbine is reduced to 8 rpm, the rotational speed of the turbine is kept by the jacking and turning device at 8 rpm; and
   the main stop steps are over.

In another example of the present invention, the state display module 326 is further used for centralizedly displaying the detected operational state and operational parameters of the turbo-generator set, the operational state and operational parameters of the auxiliary system of the turbo-generator set, the failure information appearing during running of the turbo-generator set, and the third link button on the turbine start-stop control tracking interface 327.

Wherein the third link button refers to the link entry used for being linked to the specified system interface in the nuclear power plant so as to perform more detailed supervisory and control on the turbo-generator set at the specified system interface. This third link button includes but is unlimited to the Grid Synchronization and Connection (GSY) link button, the Turbine Governing System (GRE) and Turbine Protection System (GSE) link button, the Turbine Lubrication Jacking and Turning (GGR) link button, the Generator Seal oil System (GHE) link button, the Turbine Supervisory System (GME) link button, the Moisture Separeture Reheater System (GSS) link button, the Main Steam System (VVP) link button, the Condenser Vacuum System (CVI) link button, and the Gland Steam Sealing System (CET) link button, etc..

Here the turbine start-stop control tracking interface 327 is used for centralizedly displaying the detected operational state and operational parameters of the turbo-generator set, the operational state and operational parameters of the auxiliary system of the turbo-generator set, and the failure information and the third link button appearing during running of the turbo-generator set.

Here the turbine start-stop control tracking interface 327 includes the turbo-generator set state display area, the auxiliary system state display area, the turbo-generator set failure information display area, and the link button display area.

Wherein the link button display area is used for displaying the third link button. It can be understood that for facilitating distinguishment, the turbo-generator set state output area, the auxiliary system state output area, and the turbo-generator set failure information output area included in the function tracking interface can cross each other.

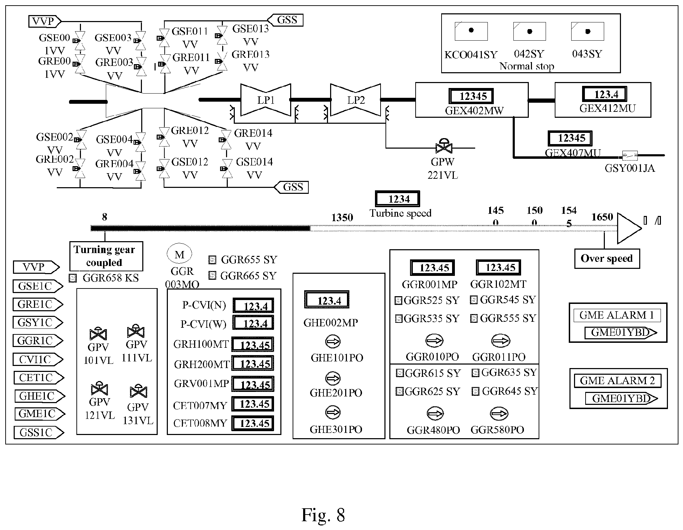

Fig. 8 is another exemplary diagram of the turbine start-stop control tracking interface 327 provided by the example of the present invention, but the specific form of the turbine start-stop control tracking interface 327 is unlimited to this exemplary diagram.

Here the turbine start-stop control tracking interface further includes the link module 329. The link module 329, according to the detected operational state and operational parameters of the turbo-generator set, the operational state and operational parameters of an auxiliary system of the turbo-generator set, and the failure information appearing during running of the turbo-generator set outputted on the turbine start-stop control tracking interface 327, is linked to a specified system interface through the third link button displayed on the turbine start-stop control tracking interface 327, so as to control in detail the start-stop of the turbo-generator set through this specified system interface.

In the examples of the present invention, the start-stop operation of the turbo-generator set is generally complicated; after the turbine is supervised and controlled according to the function tracking interface, if other parameters or device operational states of the turbo-generator set and the auxiliary system thereof need to be further obtained or examined, the third link button needs to be linked to the specified system interface. For example, during the stopping process, if the turbine gland steam sealing pressure CET007/008MY is supervised to be abnormal, the turbine can be linked to the gland steam sealing system of the turbo-generator set, and the turbine gland steam sealing pressure can be regulated, so as to make it return to the normal range; again, for example, during the stopping process, if the turbine is supervised to have a vibration alarm (GME ALARM1, GME ALARM2), the turbine can be linked to the Turbine Supervisory System (GME), so as to make a more detailed supervision for the turbine vibration.

### Example 4:

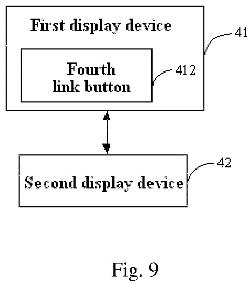

Fig. 9 shows the specific structure of the structural navigation unit 4 provided by examples of the present invention; for facilitating explanation, only the parts related to the examples of the present invention are shown.

The structural navigation unit 4 includes a first display device 41 and a second display device 42. Wherein:
the first display device 41 displays the operational state information of the units, an execution sequence and a logical relation among various subprograms of an overall operational program, and switch information among various operational states during the start-stop process of the nuclear power units.

Wherein the subprogram of the overall operational program includes but is unlimited to such subprograms as the units start control program, the units stop control program, the transient control program and the decade overhaul control program. Table 1 shows an example of the units start control program provided by the examples of the present invention, but the units start control program is unlimited to this example. Table 2 shows an example of the units stop control program provided by the examples of the present invention, but the units stop control program is unlimited to this example. Table 3 shows an example of the transient control program provided by the examples of the present invention, but the transient control program is unlimited to this example. Table 4 shows an example of the decade overhaul control program provided by the examples of the present invention, but the decade overhaul control program is unlimited to this example.

**Table 1**

| Serial number | Program code | Program name |
|---|---|---|
| 1 | D-9 | Preparation before loading - loading - drainage to the flange junction surface |
| 2 | D-10 | Installation of the large cover of the reactor and water filling of the cooling system of the reactor |
| 3 | D-11 | The cooling system of the reactor is heated to 80 degrees |
| 4 | D-12 | The chemistry platform is heated to 177 degrees |
| 5 | D-13 | RRA is isolated, heated and boosted to hot shutdown |
| 6 | D-14 | Critical state and hot bank |
| 7 | D-15 | Improving power of the reactor to 100% |
| 8 | G-1 | Transition from cold shutdown to the hot bank |
| 9 | G-2 | Transition from the hot bank to the low power running |
| 10 | GS-2 | Normal start and loading up of the turbine |

**Table 2**

| Serial number | Program code | Program name |
|---|---|---|
| 11 | D-1 | Refueling overhaul preparation - and transition to hot shutdown |
| 12 | D-2 | The reactor is cooled from hot shutdown to 170°C |
| 13 | D-3 | The reactor is cooled from 170 °C to cold shutdown and oxidized |
| 14 | D-4 | Pressure relief of the coolant of the reactor |
| 15 | D-5 | The first loop drainage and air sweeping after pressure relief |
| 16 | D-6 | Preparation before discharge - drainage to the low water level |
| 17 | G-3 | The least load to the scheduled stop of hot shutdown |
| 18 | G-4 | The units are placed in hot shutdown |
| 19 | G-5 | Transition from hot stop to maintenance of cold shutdown |
| 20 | GS-3 | Normal power reduction and stop of the turbine |
| 21 | GS-4 | Turbine trip with a load |

**Table 3**

| Serial number | Progra m code | Program name |
|---|---|---|
| 22 | 3-I-5 | Units with a plant load |
| 23 | 3-1-6 | Turbine trip and no shutdown of the reactor |

**Table 4**

| Serial number | Progra m code | Program name |
|---|---|---|
| 24 | D-26 | First loop water pressure test |

Wherein the operational state information of the units includes but is unlimited to six operating modes, two standard states and related important parameters indicating start-stop of the units. The six operating modes include Reactor Completely Discharged (RCD), Refueling Cold Shutdown (RCS), Maintenance Cold Shutdown (MCS), Normal Shutdown with RRA connected (NS/RRA), Normal Shutdown with SG (NS/SG), and Reactor in Power (RP); the two standard states include Cold shutdown and Hot shutdown; the relating important parameters indicating start-stop of the units include the first loop temperature of 80 °C, the first loop temperature of 170°C, the nuclear power of 2%, the nuclear power of 15%, and the nuclear power of 100%.

Wherein the switch information between the individual operational states includes but is unlimited to the start-stop indication and the subprogram information used for the state switch.

Wherein the start-stop indication is used for indicating start or stop of the nuclear power units. This start-stop indication can be an arrowed vertical line, which indicates switching of the nuclear power units from one operational state to another operational state, wherein an upward arrowhead indicates start while a downward arrowhead indicates stop. Wherein the start refers to a process during which the nuclear power units start from the Reactor Completely Discharged (RCD), go through loading of the nuclear fuel, are heated and boosted to hot shutdown, reach nuclear criticality, until the full power running, and can also refer to a process in the middle; the stop refers to a process during which the nuclear power units start from the full power, reduce the power to hot shutdown, and are cooled and depressurized to cold shutdown, until discharge, and can also refer to a process in the middle.

The subprogram information used for the state switch refers to the information of subprogram used for switching of the nuclear power units from an operational state to another operational state, and can be either the serial number of the subprogram or the name of the subprogram. For making the output interface concise, this subprogram information used for the state switch is the serial number of the subprogram. In actual application, the start-stop indication can be displayed together with the subprogram used for the state switch, so as to facilitate view of an operator.

In another example of the present invention, the first display device 41 further includes the attribute information. The attribute information includes but is unlimited to the code of the first display device (e.g. UOP), the attributes of the first and second loops (e.g. G), headlines (e.g. Start-up & Shutdown), quality grade (QSR), etc..

In another example of the present invention, the first display device 41 further includes a plurality of fourth link buttons 412. The individual fourth link buttons 412 are used for calling and linking to the corresponding second display device 42. In the examples of the present invention, the individual fourth link buttons 412 all have the corresponding subprogram and the second display device 42, and can call and be linked to the corresponding second display device 42 through the individual fourth link buttons 412.

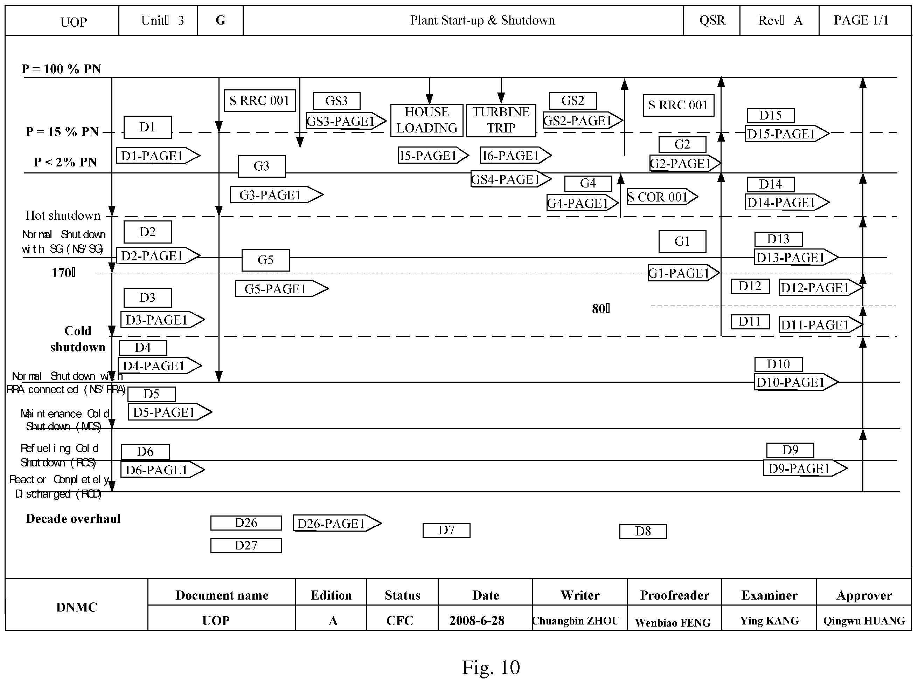

Fig. 10 is an exemplary diagram of the effect of the interface of the first display device 41 provided by the examples of the present invention, but the present invention is not limited to the exemplary effect. In the effect exemplary diagram as shown in Fig. 10, the arrowed vertical line is used as the start-stop indication, and the serial number of the subprogram of the state switch corresponding to this arrowed vertical line and the corresponding fourth link button are outputted at the side of the arrowed vertical line. For example, an arrowhead pointing from the full power state to hot shutdown state indicates switching of the nuclear power units from the full power state (i.e. P=100% PN) to hot shutdown state (i.e. Hot shutdown), and the subprogram D1 (as shown in Table 2, having the program name of refueling overhaul preparation-and transition to hot shutdown) is used to make the nuclear power units switched from the full power state (i.e. P=100% PN) to hot shutdown state (i.e. Hot shutdown), and the fourth link button (i.e. D1-PAGE1) is used for calling and linking to the second display device used for displaying the logical structure information of the subprogram D1. The rest part of Fig. 10 has the same principle, and will not be described here in detail.

The second display device 42 displays the logical structure information inside the subprogram of the overall operational program.

In the examples of the present invention, each of the subprograms is corresponding to the second display device. The individual second display devices 42 display the logical structure information inside the corresponding subprogram. Wherein the logical structure information inside the subprogram includes but is unlimited to the headline information, the periodical supervisory and operating link button, a system interface link button, the main body structural navigation information, and the overall structural navigation information.

Wherein the headline information refers to the information of the subprogram to which the second display device corresponds, including but unlimited to the subprogram name, the serial number of the units, the attributes of the first and second loops, the safe quality grade, the edition state, etc..

The periodical supervisory and operating link button is used for calling and linking to the supervisory and operating screen to which the subprogram corresponds. Wherein the supervisory and operating screen includes but is unlimited to the overall screen of the power station Status displays (YST), the main units operating screen, the main operating screen, the Pressure-Temperature diagram (PT), etc.. Different subprograms may correspond to different supervisory and operating screens; e.g. for the subprogram having the serial number of D10 (as shown in Table 1, the subprogram having the serial number D10 is used for installation of the large cover of the reactor and water filling of the cooling system of the reactor), the corresponding supervisory and operating screen includes but is unlimited to the YST overall screen, the main units operating screen (e.g. YFU), the main operating screen (e.g. the device parameters that need frequent regulation), and PT diagrams, etc..

The system interface link button is used for calling and linking to the individual system interfaces of the nuclear power plant related to the subprogram. Different subprograms may be related to the different system interface of the nuclear power plant.

The main body structural navigation information refers to the main body structural navigation information inside the subprogram, including the subprogram execution flow information and the system interface link button. Wherein the subprogram execution flow information refers to the operating item information included in the subprogram and the executing sequence and logical relation between the individual operating items.

The overall structural navigation information includes a page link button and a first display device link button. Wherein the page link button is used for calling and linking to the individual navigation pages of the subprogram. The first display device link button is used for calling and linking to the first display device.

In the examples of the present invention, the display device has a limited display area, while there is a great deal of logical structure information inside the subprogram that needs to be displayed through the second display device 42 of the nuclear power units, which is difficult to be displayed completely through one page; therefore, the second display device 42 can display the logical structure information inside the subprogram through a plurality of pages; when a plurality of pages are used to display the logical structure information inside the subprogram, the page link button of the subprogram can be used for switching between a plurality of pages of the subprogram.

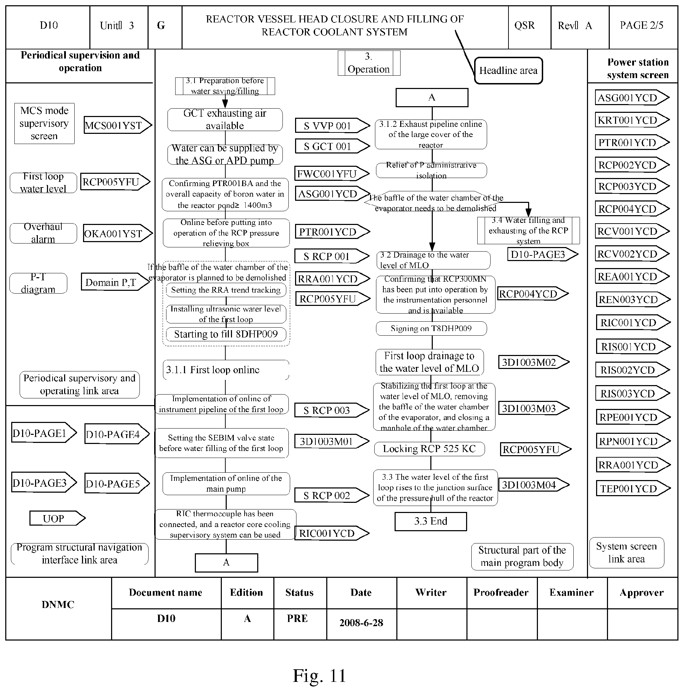

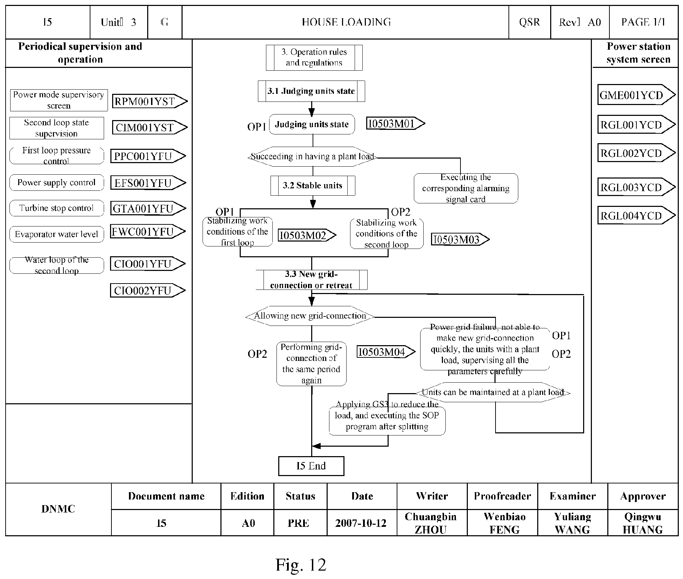

Fig. 11 is an exemplary diagram of the display interface of the second display device to which the subprogram D10 corresponds that is provided by the examples of the present invention; Fig. 12 is an exemplary diagram of the display interface of the second display device to which the subprogram 15 corresponds that is provided by the examples of the present invention, with the second display device not limited to the above exemplary diagram.

In the examples of the present invention, when the start-stop operation needs to be performed on the units, the first display device is used for displaying the individual subprograms included in the overall operational program, the units operational state information, and the switch information between the individual units operational states in the process of start-stop of the nuclear power units, and the second display device is used for displaying the logical structure of the individual subprograms included in the overall operational program; because the first display device and the second display device clearly display clearly the operational sequence and logical relation between the subprograms used for controlling the individual units operational state and tasks in the overall operational program, an operator can quickly and conveniently enter the overall operational program, so as to perform quick and accurate intervention in start-stop of the nuclear power units through the overall control system.

### Example 5:

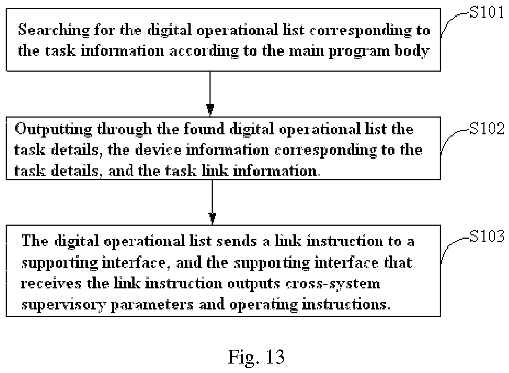

Fig. 13 shows the flowchart of the information processing method of the digital control system of the nuclear power units provided by the examples of the present invention, and will be described in detail as follows:
In Step S101, the main program body is used for outputting the task information, as well as the digital operational list information and the supporting interface information corresponding to the task information, and searching for the digital operational list corresponding to the specified task according to the main program body. Wherein the specified task refers to the task selected by a user that currently needs to be executed.

In the examples of the present invention, the related operation of the main control room is isolated from the existing paper-based regulations; the main program body is generated according to the paper-based program after the isolation, and used for outputting the task information, as well as the digital operational list information and the supporting interface information corresponding to the task information, such that an operator can be more visual and quick to learn the logical structure of the overall program of the nuclear power units through the main program body, so as to facilitate start-stop control of the nuclear power units.

In Step S102, outputting through the found digital operational list the task details, the device information corresponding to the task details, and the task link information.

In the examples of the present invention, after the related operations of the main control room are isolated from paper-based regulations, according to different targets and tasks, the digital operational list corresponding to the tasks is generated from the isolated related operations of the main control room, and the digital operational list outputs the task details, the device information to which the task details correspond, and the task link information. In another example of the present invention, the digital operational list further outputs the operational list remark information.

In Step S103, the digital operational list sends a link instruction to a supporting interface, and the supporting interface that receives the link instruction outputs cross-system supervisory parameters and operating instructions.

In the examples of the present invention, the supporting interface is a running task-oriented interface supporting the overall program of the nuclear power units, through which the cross-system supervisory and operation can be realized. Wherein the supporting interface includes but is unlimited to the state display interface, the function tracking interface. In the examples of the present invention, according to different running tasks, one or more state display interfaces and one or more function tracking interfaces can be constructed.

Wherein the digital operational list sends the link instruction to the supporting interface through the following specific steps:
The digital operational list sends the link instruction to the state display interface, with important parameters, states of important devices, signs of accidents, and accident conditions monitored through the state display interface specified by the link instruction. In the examples of the present invention, the trend tracking mode is used to monitor the conversed important parameters, and the value display mode is used to monitor the unchanged important parameters. All the individual state display interfaces can call and be linked to the interface related to the supervisory parameters in accordance with the interface design specifications.

According to the normal running state analysis and running experience, the state display interface established includes but is unlimited to a Reactor Completely Discharged display interface, a refueling cold shutdown display interface, a maintaining cold shutdown display interface, a normal shutdown mode display interface cooled by a residual heat removal system, a residual heat removal system isolation state display interface, a Reactor in Power display interface, a second loop state supervisory display interface, an alarm state supervisory display interface important for units' safety during an overhaul shutdown period, etc..

Wherein the digital operational list can send the link instruction to the supporting interface further through the following specific steps:
The digital operational list sends the link instruction to the function tracking interface, with an operating device and a required supervisory parameter of a preset stage or a preset comprehensive operation tracked through the function tracking interface specified by the link instruction. According to the normal running state analysis and running experience, the function tracking interface established includes but is unlimited to an evaporator water level control tracking interface, a first loop water pressure test control interface, a second loop water-loop start-stop tracking interface, an auxiliary power switch tracking interface, a turbine start-stop control tracking interface, etc..

Because the main program body from which the digital operational list is isolated lacks clear logical relation, the method further comprises the following step in another example of the present invention, so as to provide for an operator with clear logical relation of the overall program of the nuclear power units:
outputting logical structure information of an overall program of the nuclear power units through the structural navigation unit. The structural navigation information is constructed according to the logical structure of the overall program of the nuclear power units, which is described through the structural navigation unit, so as to help an operator establish the whole view of the overall program of the nuclear power units. Wherein the structural navigation unit can be in the form of HTML.

In another example of the present invention, the method further comprises the following steps:
the main program body sends the link instruction to the structural navigation unit, which then outputs the logical structure information of the overall program of the nuclear power units.

In another example of the present invention, the method further comprises the following steps:
after the link to the structural navigation unit, entering the digital system of the overall program of the nuclear power units through the structural navigation unit.

In another example of the present invention, the method further comprises the following steps:
the structural navigation unit sends the link instruction to the system program and/or the system interface included by the system program, so as to link to the system program and/or the system interface included in the system program specified by the link instruction.

Wherein the overall program is used for operating the entire units, while the system program is only limited to a certain system of the operating power station, which are two operational programs of different types.

In another example of the present invention, the method further comprises the following steps:
realizing digital control of a first loop water pressure test of a PWR nuclear power plant through the first loop water pressure test control interface.

In another example of the present invention, the method further comprises the following steps:
realizing the start-stop control of a turbo-generator set of the nuclear power plant through the turbine start-stop control tracking interface.

### Example 6:

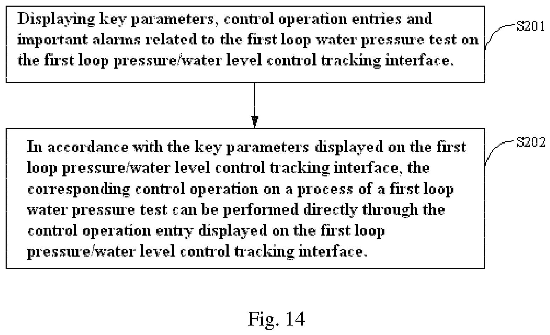

Fig. 14 shows the flowchart of the digital control of the first loop water pressure test of the PWR nuclear power plant through the first loop water pressure test control interface provided by the examples of the present invention, and will be described in detail as follows:
In Step S201, centralizedly displaying key parameters, control operation entries and important alarms related to the first loop water pressure test of the PWR nuclear power plant on the first loop water pressure test control interface.
In Step S202, in accordance with the key parameters displayed on the first loop water pressure test control interface, performing the corresponding control operation on a process of a first loop water pressure test directly through the control operation entry displayed on the first loop water pressure test control interface.

In the examples of the present invention, when the process of the first loop water pressure test needs to be controlled, an operator can control the process of the first loop water pressure test directly through the control operation entry displayed on the first loop water pressure test control interface according to the key parameters related to the first loop water pressure test or the specific process of the water pressure test displayed on the first loop water pressure test control interface, as well as the water pressure test operating program.

In the examples of the present invention, because all the control parameters, the control operation entry, and the important alarms related to the first loop water pressure test are displayed on the same interface, e.g. the first loop water pressure test control interface, when the process of the first loop water pressure test needs to be controlled, in accordance with the key parameters displayed on the first loop water pressure test control interface, the corresponding control operation on a process of a first loop water pressure test can be performed directly through the control operation entry displayed on the first loop water pressure test control interface, and thus there is no need to jump between a plurality of interfaces, enabling an operator of the nuclear power plant to control the process of the first loop water pressure test more visually, quickly and efficiently.

### Example 7:

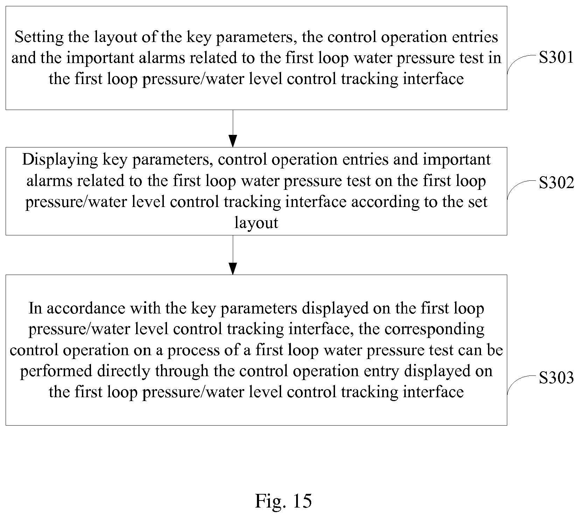

Fig. 15 shows the flowchart of the digital control of the first loop water pressure test of the PWR nuclear power plant through the first loop water pressure test control interface provided by another example of the present invention, and will be described in detail as follows:
In Step S301, setting the layout of the key parameters, the control operation entries and the important alarms related to the first loop water pressure test of the PWR nuclear power plant in the first loop water pressure test control interface.
In Step S302, displaying key parameters, control operation entries and important alarms related to the first loop water pressure test of the PWR nuclear power plant on the first loop water pressure test control interface according to the set layout.
In Step S303, in accordance with the key parameters displayed on the first loop water pressure test control interface, performing the corresponding control operation on a process of a first loop water pressure test directly through the control operation entry displayed on the first loop water pressure test control interface.

In the examples of the present invention, because of the limited display area of the first loop water pressure test control interface, by presetting the layout of the key parameters, the control operation entries and the important alarms related to the first loop water pressure test in the first loop water pressure test control interface, the key parameters, the control operation entry and the important alarms related to the first loop water pressure test are displayed more clearly and visually on the first loop water pressure test control interface, thus facilitating fast control and interference of the water pressure test process by the user.

The flowchart of the digital control method of the first loop water pressure test of the PWR nuclear power plant realized through the first loop water pressure test control interface in the function tracking interface provided by the examples of the present invention will further be described in detail below with reference to one specific example.

The first loop, from the emptying state to the qualified 25 bar full-water and exhaust, uses the same interface for all the operations as in the usual normal start, starting from 25 bar, entering the water pressure test state, using the first loop water pressure test control interface for running operation and supervision on the water pressure test process.

Please see the first loop water pressure test control interface as shown in Fig. 5, taking the boost operation as an example, so as to explain application of the first loop water pressure test control interface. Increasing the charging flow through operation of the charging regulating valve RCV046VP displayed on the first loop water pressure test control interface, and displaying the read charging flow RCV018MD on the first loop water pressure test control interface. Decreasing the discharging flow through operation of the discharging regulating valve RCV013VP displayed on the first loop water pressure test control interface, and displaying the read discharging flow RCV005MD on the first loop water pressure test control interface. When the water flow entering the first loop is greater than that out of the first loop, the pressure of the first loop rises; the pressure rising trend of the first loop is supervised through the first loop pressure trend tracking displayed on the first loop water pressure test control interface, and the pressure rising rate is controlled within a permitted range by supervisory readings of the rate of change of the pressure displayed on the first loop water pressure test control interface.

When an exception occurs, such as the pressure is over high, the water pressure test over-pressure protection action, the stop water pressure test pump, and turning on RIS 124VP for decompressing can all be seen visually on the first loop water pressure test control interface.

### Example 8:

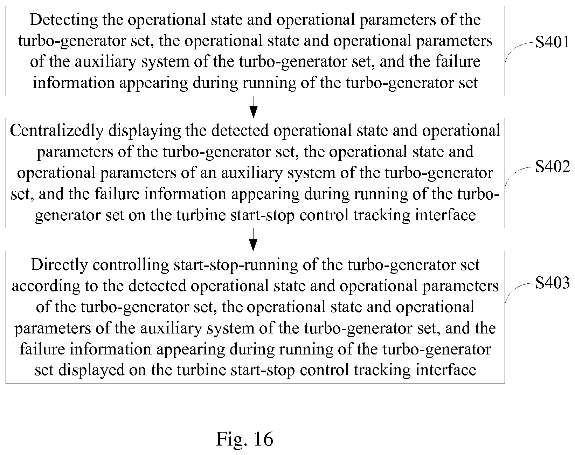

Fig. 16 shows the flowchart of the start-stop control of the turbo-generator set of the nuclear power plant realized through the turbine start-stop control tracking interface provided by the examples of the present invention, and will be described in detail as follows:
In Step S401, detecting operational state and operational parameters of the turbo-generator set, the operational state and operational parameters of the auxiliary system of the turbo-generator set, and the failure information appearing during running of the turbo-generator set.
In Step S402, centralizedly displaying the detected operational state and operational parameters of the turbo-generator set, the operational state and operational parameters of an auxiliary system of the turbo-generator set, and the failure information appearing during running of the turbo-generator set on the turbine start-stop control tracking interface.
In Step S403, directly controlling stop of the turbo-generator set according to the detected operational state and operational parameters of the turbo-generator set, the operational state and operational parameters of an auxiliary system of the turbo-generator set, and the failure information appearing during running of the turbo-generator set displayed on the turbine start-stop control tracking interface.

In the examples of the present invention, the controls that can be directly performed on the turbo-generator set according to the operational state and operational parameters of the turbo-generator set, the operational state and operational parameters of the auxiliary system of the turbo-generator set, the failure information appearing during running of the turbo-generator set, and the plant production plan displayed on the turbine start-stop control tracking interface include but are unlimited to start, normal stop and emergent stop of the turbine.

In the examples of the present invention, by centralizedly displaying the detected operational state and operational parameters of the turbo-generator set, the operational state and operational parameters of an auxiliary system of the turbo-generator set, and the failure information appearing during running of the turbo-generator set on one and the same interface, an operator is convenient to discover abnormality of the turbo-generator visually and quickly, and acquires the key parameters quickly and accurately and determines the reasons, thus controlling and intervening start-stop of the turbo-generator set of the nuclear power plant visually, quickly and accurately, so as to guarantee safety of the turbo-generator set of the nuclear power plant.

### Example 9:

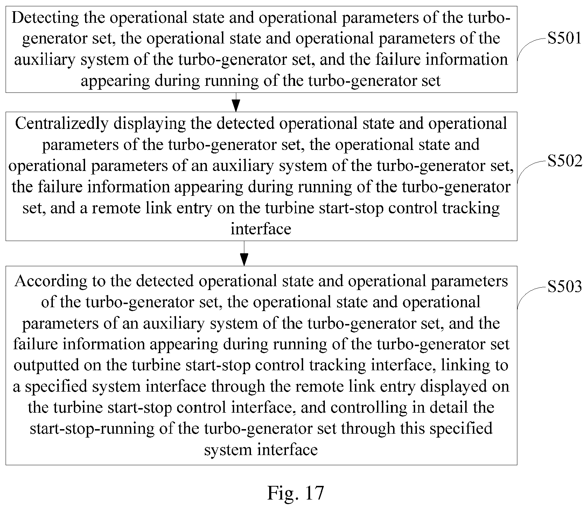

Fig. 17 shows the flowchart of the start-stop control of the turbo-generator set of the nuclear power plant realized through the turbine start-stop control tracking interface provided by another examples of the present invention, and will be described in detail as follows:
In Step S501, detecting the operational state and operational parameters of the turbo-generator set, the operational state and operational parameters of the auxiliary system of the turbo-generator set, and the failure information appearing during running of the turbo-generator set.
In Step S502, centralizedly displaying the detected operational state and operational parameters of the turbo-generator set, the operational state and operational parameters of an auxiliary system of the turbo-generator set, the failure information appearing during running of the turbo-generator set, and a third link button on the turbine start-stop control tracking interface.

In the examples of the present invention, the turbine start-stop control tracking interface is provided for centralizedly displaying the detected operational state and operational parameters of the turbo-generator set, the operational state and operational parameters of the auxiliary system of the turbo-generator set, and the failure information and the third link button appearing during running of the turbo-generator set.

Here the turbine start-stop control tracking interface includes the turbo-generator set state display area, the auxiliary system state display area, the turbo-generator set failure information display area, and the link button display area.

In Step S503, according to the detected operational state and operational parameters of the turbo-generator set, the operational state and operational parameters of an auxiliary system of the turbo-generator set, and the failure information appearing during running of the turbo-generator set outputted on the turbine start-stop control tracking interface, linking to a specified system interface through the third link button displayed on the turbine start-stop control tracking interface, and controlling in detail the start-stop-running of the turbo-generator set through this specified system interface.

In the examples of the present invention, by centralizedly displaying the detected operational state and operational parameters of the turbo-generator set, the operational state and operational parameters of an auxiliary system of the turbo-generator set, and the failure information appearing during running of the turbo-generator set as well as the link button on one and the same interface, i.e. the turbine start-stop control tracking interface, the turbine start-stop control tracking interface can be used for visual and quick link to the specified system interface inside the nuclear power plant, through which the turbo-generator set can be controlled and intervened conveniently and quickly in more detail, thus further improving safety of the turbo-generator set.

### Example 10:

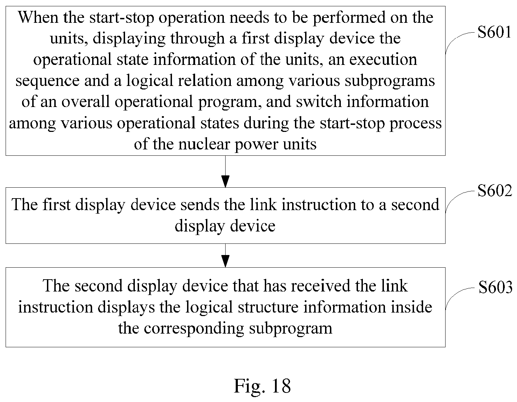

Fig. 18 shows the flowchart provided by the examples of the present invention where the digital system of the overall program of the nuclear power units is entered through the structural navigation unit, and will be described in detail as follows:
In Step S601, displaying through a first display device the operational state information of the units, an execution sequence and a logical relation among various subprograms of an overall operational program, and switch information among various operational states during the start-stop process of the nuclear power units.

Wherein the individual subprograms of the overall operational program include but are unlimited to such subprograms as the units start control program, the units stop control program, the transient control program and the decade overhaul control program. The operational state information of the units includes but is unlimited to six operating modes, two standard states and related important parameters indicating start-stop of the units. The six operating modes include Reactor Completely Discharged (RCD), Refueling Cold Shutdown (RCS), Maintenance Cold Shutdown (MCS), Normal Shutdown with RRA connected (NS/RRA),Normal Shutdown with SG (NS/SG), and Reactor in Power (RP); the two standard states include Cold shutdown and Hot shutdown; the relating important parameters indicating start-stop of the units include the first loop temperature of 80 °C, the first loop temperature of 170°C, the nuclear power of 2%, the nuclear power of 15%, and the nuclear power of 100%.

Wherein the switch information between the individual operational states includes but is unlimited to the start-stop indication and the subprogram information used for the state switch. Wherein the start-stop indication is used for indicating start or stop of the nuclear power units. Wherein the subprogram information used for the state switch refers to the information of subprogram used for switching of the nuclear power units from a state to another state.

In another example of the present invention, the first display device 41 further includes a plurality of fourth link buttons. The individual fourth link buttons are used for calling and linking to the corresponding second display device. In the examples of the present invention, the individual fourth link buttons all have the corresponding subprogram and the second display device, and can call and be linked to the corresponding second display device through the individual fourth link buttons.

In Step S602, the first display device sends the link instruction to a second display device.

In the examples of the present invention, the link instruction can be sent to the second display device through the first link button in the first display device.

In the examples of the present invention, when the nuclear power units need to be switched from a state (e.g. P=100% PN) to another state (e.g. Hot shutdown), the subprogram (e.g. D1) used for the state switch can be determined according to the information displayed on the first display device, and then the first link button to which the subprogram (i.e. D1) corresponds is used for calling and linking to the corresponding second display device, through which the logical structure information of the subprogram (i.e. D1) is displayed directly.

In Step S603, and the second display device that has received the link instruction displays the logical structure information inside the corresponding subprogram.

Wherein the logical structure information inside the subprogram includes but is unlimited to the headline information, the periodical supervisory and operating link button, a system interface link button, the main body structural navigation information, and the overall structural navigation information. The overall structural navigation information includes the system execution flow information and the screen link button. The overall structural navigation information includes a page link button and a first display device link button.

In the examples of the present invention, the first display device can be used for displaying the individual subprograms included in the overall operational program, the units operational state information, and the switch information between the individual units operational states in the process of start-stop of the nuclear power units; an operator can send the link instruction to the second display device through the first display device, so as to enter the second display device to which the link instruction corresponds. The second display device can display the logical structure information of the corresponding subprogram, and make an operator establish an overall view of the start-stop of the units, so as to overcome the defect of the DCS master control room in visuality, enable an operator to quickly and conveniently enter the overall operational program, and perform the quick and accurate control on start-stop of the nuclear power units through the digital overall operational program.

In another example of the present invention, the method further comprises the following step after Step S603:
the second display device sends the link instruction to a system interface, so as to link to the system interface specified by the link instruction.

In this example, the second display device sends the link instruction to a system interface, thus enabling an operator to enter the system interface quickly and conveniently and to control and intervene start-stop of the nuclear power units through the system interface.

In another example of the present invention, the method further comprises the following step after Step S603:
the second display device sends the link instruction to a supervisory and operating screen, so as to link to the supervisory and operating screen specified by the link instruction.

In this example, the second display device sends the link instruction to a supervisory and operating screen, thus enabling an operator to enter the supervisory and operating screen quickly and conveniently and to obtain the supervisory parameters of the nuclear power units.

In another example of the present invention, the method further comprises the following step after Step S603:
the second display device sends the link instruction to the operating screen included in the corresponding subprogram, so as to link to the operating screen specified by the link instruction.

In the examples of the present invention, because the individual subprograms are all systems used for completing a certain specific function and include a plurality of operating interfaces used for completing the function, in order to enter the specific operating interface of the corresponding subprogram from the second display device, the second display device can be used for sending the link instruction to the operating screen included in the corresponding subprogram.

In another example of the present invention, the method further comprises the following step after Step S603:
the second display device sends the link instruction to various navigation pages included in the corresponding subprogram, so as to link to the navigation page specified by the link instruction.

In this example, the display device has a limited display area, while there is a great deal of logical structure information of the subprogram that needs to be displayed through the second display device of the nuclear power units, which is difficult to be displayed completely through one page; therefore, the second display device of the nuclear power units can display the logical structure information of the subprogram through a plurality of pages; when a plurality of pages are used to display the logical structure information of the subprogram, switching between a plurality of pages can be performed through the page link button.

In another example of the present invention, the method further comprises the following step after Step S603:
the second display device sends the link instruction to the first display device, so as to link to the first display device, thus returning from the second display device to the first display device, thereby making the overall operational program more flexible and easier to use.

The present invention has the following beneficial effects compared with the prior art: Overcoming the defect of DCS in visuality, improving the operational efficiency of the overall program of the nuclear power units, and giving full play to the advantages of DCS in the information processing. Besides, when realizing digital control of a first loop water pressure test of a PWR nuclear power plant through the first loop water pressure test control interface, by displaying key parameters, control operation entries and important alarms related to the first loop water pressure test on the first loop water pressure test control interface, in accordance with the key parameters displayed on the first loop water pressure test control interface, the corresponding control operation on a process of a first loop water pressure test can be performed directly through the control operation entry displayed on the first loop water pressure test control interface, and thus the first loop water pressure test process can be visually and quickly controlled. Besides, by setting the layout of the first loop water pressure test control interface, an operator can identify the key parameters, the control operation entry and the important alarms related to the first loop water pressure test that are displayed on the first loop water pressure test control interface more visually and clearly, thus facilitating fast control and interference of the water pressure test process by the user.

Besides, when realizing the start-stop control of a turbo-generator set of the nuclear power plant through the turbine start-stop control tracking interface, by centralizedly displaying the detected operational state and operational parameters of the turbo-generator set, the operational state and operational parameters of an auxiliary system of the turbo-generator set, and the failure information appearing during running of the turbo-generator set on one and the same interface, an operator is convenient to discover abnormality of the turbo-generator visually and quickly, and acquires the key parameters quickly and accurately and determines the reasons, thus controlling and intervening start-stop of the turbo-generator set of the nuclear power plant visually, quickly and accurately, so as to guarantee safety of the turbo-generator set of the nuclear power plant.

Moreover, when entering the digital system of the overall program of the nuclear power units through the structural navigation unit, a first display device is used for displaying the operational state information of the units, and an execution sequence and a logical relation among various subprograms of an overall operational program, and switch information among various operational states during the start-stop process of the nuclear power units, and the second display device is used for displaying the logical structure of the individual subprograms included in the overall operational program; because the first display device and the second display device clearly display the operational sequence and logical relation between the subprograms used for controlling the individual units operational state and tasks in the overall operational program, and make an operator establish an overall view of the start-stop of the units, so as to overcome the defect of the DCS master control room in visuality, enable an operator to quickly and conveniently enter the overall operational program, and perform the quick and accurate control on start-stop of the nuclear power units through the digital overall operational program.

Those of ordinary skill in the art can understand that, All or part of the steps included in the above example methods can be completed with the associated hardware that is commanded through the program, which may be stored in a computer readable storage medium, such as ROM/RAM, a disk and CD-ROM.

All the above are only the preferred examples of the present invention, and do not limit the present invention.

## Claims

1. An information processing method of digital control systems of nuclear power units, wherein the method comprises the following steps:
outputting (S101) through a main program body (1) a task information, as well as a digital operational list information and a supporting interface information corresponding to the task information, and searching for a digital operational list (2) corresponding to a specified task according to the main program body (1);
outputting (S102) task details, device information to which the task details correspond, and task link information through the found digital operational list (2);
the digital operational list (2) sends a link instruction to a supporting interface (3), and the supporting interface (3) that receives the link instruction outputs cross-system supervisory parameters and operating instructions (S103);
**characterized in that**
the method further comprises the following steps before the step of outputting through (S102) the main program body (1) the task information, as well as the digital operational list information and the supporting interface information corresponding to the task information, and searching for the digital operational list (2) corresponding to the specified task according to the main program body (1):
isolating related operations of a master control room from paper-based regulations, and generating the main program body (1) according to contents in the paper-based regulations after isolating the related operations of the master control room; and
according to different targets and tasks, generating the digital operational list (2) corresponding to the tasks from the related operations of the master control room isolated from the paper-based regulations.

2. The information processing method of digital control systems of nuclear power units according to claim 1, wherein the supporting interface (3) includes at least one of a state display interface (31) and a function tracking interface (32); and
the step (S103) that the digital operational list (2) sends the link instruction to the supporting interface (3), and the supporting interface (3) that receives the link instruction outputs the cross-system supervisory parameters and operating instructions specifically as follows:
the digital operational list (2) sends the link instruction to the state display interface (31), with important parameters, states of important devices, signs of accidents, and accident conditions supervised through the state display interface (31) specified by the link instruction; and/or
the digital operational list (2) sends the link instruction to the function tracking interface (32), with an operating device and a required supervisory parameter of a preset stage or a preset comprehensive operation tracked through the function tracking interface (32) specified by the link instruction.

3. The information processing method of digital control systems of nuclear power units according to claim 2, wherein the state display interface (31) includes a Reactor Completely Discharged display interface, a refueling cold shutdown display interface, a maintaining cold shutdown display interface, a normal shutdown mode display interface cooled by a residual heat removal system, a residual heat removal system isolation state display interface, a Reactor in Power display interface, a second loop state supervisory display interface, and an alarm state supervisory display interface important for units' safety during an overhaul shutdown period; and
the function tracking interface (32) includes an evaporator water level control tracking interface, a first loop water pressure test control interface (322), a second loop water-loop start-stop tracking interface, an auxiliary power switch tracking interface, and a turbine start-stop control tracking interface.

4. The information processing method of digital control systems of nuclear power units according to claim 3, wherein the method further comprises the following steps after the step (S103) that the digital operational list (2) sends the link instruction to the supporting interface (3):
realizing digital control of a first loop water pressure test of a pressurized water reactor (PWR) nuclear power plant through the first loop water pressure test control interface (322), comprising the following substeps:
centralizedly displaying (S201) key parameters, control operation entries and important alarms related to the first loop water pressure test of the PWR nuclear power plant on the first loop water pressure test control interface (322); and
in accordance with the key parameters displayed on the first loop water pressure test control interface (322), performing (S202) the corresponding control operation on a process of a first loop water pressure test directly through the control operation entry displayed on the first loop water pressure test control interface (322).

5. The information processing method of digital control systems of nuclear power units according to claim 4, wherein the key parameters related to the first loop water pressure test include a first loop pressure normal measurement wide-range channel, a water pressure test dedicated first loop pressure wide/narrow-range measurement channel, a capacity control tank water level, a first loop weighted average temperature, a first loop pressure change rate, a charging flow, a discharging flow, a discharging pressure, a main pump gland steam sealing infusing flow, and an excess discharging pressure; and
the first loop pressure normal measurement wide-range channel is displayed on the first loop water pressure test control interface (322) by tracking trend, and the capacity control tank water level is displayed on the first loop water pressure test control interface (322) by tracking the parameters and trends simultaneously; and
the control operation entry related to the first loop water pressure test includes a control operation entry of the device and a pressure remote control operation entry, wherein the control operation entry of the device includes a first loop main pump, a charging pump, a water pressure test pump, a charging loop and a valve thereof, a discharging loop, a main pump gland steam sealing infusing loop, an excess discharging and main pump gland steam sealing reflux loop, and a pressure protection loop; the pressure remote control operation entry includes the following operations: a boost and depressurization operation, a stabilizing pressure operation, isolating or commissioning a discharging orifice plate, isolating or commissioning charge and discharge, infusing control pressure with the excess discharging and main pump gland steam sealing, and maintaining a stable-pressure operation under abnormal circumstances.

6. The information processing method of digital control systems of nuclear power units according to claim 3, wherein the method further comprises the following steps after the step (S103) that the digital operational list (2) sends the link instruction to the supporting interface (3):
realizing the start-stop control of a turbo-generator set of the nuclear power plant through the turbine start-stop control tracking interface, comprising the following substeps:
detecting (S401) operational state and operational parameters of the turbo-generator set, operational state and operational parameters of an auxiliary system of the turbo-generator set, and failure information appearing during running of the turbo-generator set;
centralizedly displaying (S402) the detected operational state and operational parameters of the turbo-generator set, the operational state and operational parameters of an auxiliary system of the turbo-generator set, and the failure information appearing during running of the turbo-generator set on the turbine start-stop control tracking interface; and
directly controlling (S403) start-stop of the turbo-generator set according to the detected operational state and operational parameters of the turbo-generator set, the operational state and operational parameters of an auxiliary system of the turbo-generator set, and the failure information appearing during running of the turbo-generator set displayed on the turbine start-stop control tracking interface.

7. The information processing method of digital control systems of nuclear power units according to claim 6, wherein the step of centralizedly displaying (S402) the detected operational state and operational parameters of the turbo-generator set, the operational state and operational parameters of an auxiliary system of the turbo-generator set, and the failure information appearing during running of the turbo-generator set on the turbine start-stop control tracking interface is specifically as follows:
centralizedly displaying (S502) the detected operational state and operational parameters of the turbo-generator set, the operational state and operational parameters of an auxiliary system of the turbo-generator set, the failure information appearing during running of the turbo-generator set, and a third link button on the turbine start-stop control tracking interface; here the method further comprises the following steps:
according to the detected operational state and operational parameters of the turbo-generator set, the operational state and operational parameters of an auxiliary system of the turbo-generator set, and the failure information appearing during running of the turbo-generator set outputted on the turbine start-stop control tracking interface, linking to a specified system interface (6) through the third link button displayed on the turbine start-stop control tracking interface, and controlling in detail the start-stop of the turbo-generator set through this specified system interface (6) (S503).

8. The information processing method of digital control systems of nuclear power units according to any of claims 1-7, wherein the method further comprises the following steps: outputting logical structure information of an overall program of the nuclear power units through the structural navigation interface; and
the method further comprises the following steps before the step of outputting the logical structure information of the overall program of the nuclear power units through the structural navigation interface: searching for the structural navigation interface according to the main program body (1), and outputting the logical structure information of the overall program of the nuclear power units through the found structural navigation interface; and
the method further comprises the following steps after the step of searching for the structural navigation interface according to the main program body (1) and outputting the logical structure information of the overall program of the nuclear power units through the found structural navigation interface:
the structural navigation interface sends the link instruction to the digital operational list (2) and/or the supporting interface (3), so as to link to the digital operational list (2) and/or the supporting interface (3) specified by the link instruction; and/or
the structural navigation interface sends the link instruction to the system program (5) and/or the system interface (6) included by the system program (5), so as to link to the system program (5) and/or the system interface (6) included in the system program (5) specified by the link instruction.

9. The information processing method of digital control systems of nuclear power units according to claim 8, wherein the method further comprises the following step after the step of outputting the logical structure information of the overall program of the nuclear power units through the structural navigation interface: entering the digital system of the overall program of the nuclear power units through the structural navigation unit (4); and
the step of entering the digital system of the overall program of the nuclear power units through the structural navigation unit (4) is specifically as follows: displaying through a first display device (41) the operational state information of the units, an execution sequence and a logical relation among various subprograms of an overall operational program, and switch information among various operational states during the start-stop process of the nuclear power units;
the first display device (41) sends the link instruction to a second display device (42); and the second display device (42) that has received the link instruction displays the logical structure information inside the corresponding subprogram; and
the method further comprises the following steps after the step that the second display device (42) that has received the link instruction displays the logical structure information inside the corresponding subprogram:
the second display device (42) sends the link instruction to a system screen, so as to link to the system screen specified by the link instruction; and/or
the second display device (42) sends the link instruction to a supervisory and operating screen, so as to link to the supervisory and operating screen specified by the link instruction.

10. The information processing method of digital control systems of nuclear power units according to claim 8, wherein the method further comprises the following step after the step of outputting the logical structure information of the overall program of the nuclear power units through the structural navigation interface: entering the digital system of the overall program of the nuclear power units through the structural navigation unit (4); and
the step of entering the digital system of the overall program of the nuclear power units through the structural navigation unit (4) is specifically as follows: displaying through a first display device (41) the operational state information of the units, an execution sequence and a logical relation among various subprograms of an overall operational program, and switch information among various operational states during the start-stop process of the nuclear power units;
the first display device (41) sends the link instruction to a second display device (42); and the second display device (42) that has received the link instruction displays the logical structure information inside the corresponding subprogramt; and
the method further comprises the following steps after the step that the second display device (42) that has received the link instruction displays the logical structure information of the corresponding subprogram:
the second display device (42) sends the link instruction to various navigation pages included in the corresponding subprogram, so as to link to the navigation page specified by the link instruction; and/or
the second display device (42) sends the link instruction to the first display device (41), so as to link to the first display device (41).

## Patentansprüche

1. Informationsverarbeitungsverfahren für digitale Steuersysteme von Kernkraftwerksblöcken, wobei das Verfahren die folgenden Schritte umfasst:
Ausgeben (S101) einer Aufgabeninformation sowie einer Digitale-Betriebsliste-Information und einer Unterstützungsschnittstelleninformation, die der Aufgabeninformation entspricht, über einen Hauptprogrammkörper (1) und Suchen einer digitalen Betriebsliste (2), die einer spezifizierten Aufgabe entspricht, gemäß dem Hauptprogrammkörper (1);
Ausgeben (S102) von Aufgabendetails, Vorrichtungsinformationen, denen die Aufgabendetails entsprechen, und Aufgabenverknüpfungsinformationen über die gefundene digitale Betriebsliste (2);
wobei die digitale Betriebsliste (2) eine Verknüpfungsanweisung an eine Unterstützungsschnittstelle (3) sendet und die Unterstützungsschnittstelle (3), die die Verknüpfungsanweisung empfängt, systemübergreifende Überwachungsparameter und Betriebsanweisungen (S103) ausgibt;
**dadurch gekennzeichnet, dass**
das Verfahren vor dem Schritt des Ausgebens (S102) der Aufgabeninformation sowie der Digitale-Betriebsliste-Information und der Unterstützungsschnittstelleninformation, die der Aufgabeninformation entspricht, über den Hauptprogrammkörper (1) und des Suchens der digitalen Betriebsliste (2), die der spezifizierten Aufgabe entspricht, gemäß dem Hauptprogrammkörper (1) ferner die folgenden Schritte umfasst:
Isolieren von verwandten Vorgängen eines Hauptkontrollraums von papierbasierten Vorschriften und Erzeugen des Hauptprogrammkörpers (1) gemäß dem Inhalt der papierbasierten Vorschriften nach dem Isolieren der verwandten Vorgänge des Hauptkontrollraums; und,
gemäß verschiedenen Zielen und Aufgaben, Erzeugen der digitalen Betriebsliste (2), die den Aufgaben entspricht, aus den verwandten Vorgängen des Hauptkontrollraums, die von den papierbasierten Vorschriften isoliert wurden.

2. Informationsverarbeitungsverfahren für digitale Steuersysteme von Kernkraftwerksblöcken nach Anspruch 1, wobei
die Unterstützungsschnittstelle (3) mindestens eine aus einer Zustandsanzeigeschnittstelle (31) und einer Funktionsverfolgungsschnittstelle (32) beinhaltet und
der Schritt (S103), in dem die digitale Betriebsliste (2) die Verknüpfungsanweisung an die Unterstützungsschnittstelle (3) sendet und die Unterstützungsschnittstelle (3), die die Verknüpfungsanweisung empfängt, die systemübergreifenden Überwachungsparameter und Betriebsanweisungen ausgibt, insbesondere Folgendes vorsieht:
die digitale Betriebsliste (2) sendet die Verknüpfungsanweisung an die Zustandsanzeigeschnittstelle (31), wobei wichtige Parameter, Zustände wichtiger Vorrichtungen, Anzeichen von Unfällen und Unfallbedingungen, die durch die Zustandsanzeigeschnittstelle (31) überwacht werden, durch die Verknüpfungsanweisung spezifiziert werden; und/oder
die digitale Betriebsliste (2) sendet die Verknüpfungsanweisung an die Funktionsverfolgungsschnittstelle (32), wobei eine Betriebsvorrichtung und ein erforderlicher Überwachungsparameter einer voreingestellten Stufe oder eines voreingestellten umfassenden Vorgangs, die durch die Funktionsverfolgungsschnittstelle (32) verfolgt werden, durch die Verknüpfungsanweisung spezifiziert werden.

3. Informationsverarbeitungsverfahren für digitale Steuersysteme von Kernkraftwerksblöcken nach Anspruch 2, wobei
die Zustandsanzeigeschnittstelle (31) eine Reaktor-Vollständig-Entladen-Anzeigeschnittstelle, eine Betankungs-Kaltabschaltungs-Anzeigeschnittstelle, eine Aufrechterhaltungs-Kaltabschaltungs-Anzeigeschnittstelle, eine Normalabschaltmodus-Anzeigeschnittstelle, die durch ein Restwärmeabfuhrsystem gekühlt wird, eine Restwärmeabfuhrsystem-Isolationszustands-Anzeigeschnittstelle, eine Reaktor-in-Leistung-Anzeigeschnittstelle, eine Zweite-Schleife-Zustandsüberwachungs-Anzeigeschnittstelle und eine Alarm-Zustandsüberwachungs-Anzeigeschnittstelle, die für die Sicherheit der Einheiten während einer Überholungsabschaltungsphase wichtig ist, beinhaltet; und
die Funktionsverfolgungsschnittstelle (32) eine Verdampfer-Wasserstands-Steuerungs-Verfolgungsschnittstelle, eine Erste-Schleife-Wasserdruckprüfungs-Steuerungsschnittstelle (322), eine Zweite-Schleife-Wasserschleifen-Start-Stop-Verfolgungsschnittstelle, eine Hilfsleistungsschalter-Verfolgungsschnittstelle und eine Turbinen-Start-Stopp-Steuerungs-Verfolgungsschnittstelle beinhaltet.

4. Informationsverarbeitungsverfahren für digitale Steuersysteme von Kernkraftwerksblöcken nach Anspruch 3, wobei
das Verfahren nach dem Schritt (S103), in dem die digitale Betriebsliste (2) die Verknüpfungsanweisung an die Unterstützungsschnittstelle (3) sendet, ferner die folgenden Schritte umfasst:
Ausführen einer digitalen Steuerung einer Erste-Schleife-Wasserdruckprüfung einer Kernkraftanlage mit Druckwasserreaktor (DWR) über die Erste-Schleife-Wasserdruckprüfungs-Steuerungsschnittstelle (322) mit den folgenden Teilschritten:
zentrales Anzeigen (S201) von Schlüsselparametern, Steuerungsvorgangseinträgen und wichtigen Alarmen, die sich auf die Erste-Schleife-Wasserdruckprüfung der DWR-Kernkraftanlage beziehen, auf der Erste-Schleife-Wasserdruckprüfungs-Steuerungsschnittstelle (322); und
gemäß den Schlüsselparametern, die auf der Erste-Schleife-Wasserdruckprüfungs-Steuerungsschnittstelle (322) angezeigt werden, Durchführen (S202) des entsprechenden Steuerungsvorgangs für einen Prozess einer Erste-Schleife-Wasserdruckprüfung direkt über den Steuerungsvorgangseintrag, der auf der Erste-Schleife-Wasserdruckprüfungs-Steuerungsschnittstelle (322) angezeigt wird.

5. Informationsverarbeitungsverfahren für digitale Steuersysteme von Kernkraftwerksblöcken nach Anspruch 4, wobei
die Schlüsselparameter, die sich auf die Erste-Schleife-Wasserdruckprüfung beziehen, einen Erste-Schleife-Druck-Normalmessungs-Weitbereichskanal, einen für die Wasserdruckprüfung dedizierten Erste-Schleife-Druckmessungs-Weit/Schmalbereichsmessungskanal, einen Kapazitätskontrolltank-Wasserstand, eine gewichtete Erste-Schleife-Durchschnittstemperatur, eine Erste-Schleife-Druckänderungsrate, einen Ladestrom, einen Entladestrom, einen Entladedruck, einen Hauptpumpen-Sperrdampfabdichtungs-Infusionsstrom und einen Überschussentladedruck beinhalten; und
der Erste-Schleife-Druck-Normalmessungs-Weitbereichskanal auf der Erste-Schleife-Wasserdruckprüfungs-Steuerungsschnittstelle (322) durch Verfolgen des Trends angezeigt wird und der Kapazitätskontrolltank-Wasserstand auf der Erste-Schleife-Wasserdruckprüfungs-Steuerungsschnittstelle (322) durch gleichzeitiges Verfolgen der Parameter und der Trends angezeigt wird; und
der Steuerungsvorgangseintrag, der sich auf die Erste-Schleife-Wasserdruckprüfung bezieht, einen Steuerungsvorgangseintrag der Vorrichtung und einen Druckfernsteuerungsvorgangseintrag beinhaltet, wobei der Steuerungsvorgangseintrag der Vorrichtung eine Erste-Schleife-Hauptpumpe, eine Ladepumpe, eine Wasserdruckprüfungspumpe, eine Ladeschleife und ein Ventil davon, eine Entladeschleife, eine Hauptpumpen-Sperrdampfabdichtungs-Infusionsschleife, eine Überschussentlade- und Hauptpumpen-Sperrdampfabdichtungs-Rückflussschleife und eine Druckschutzschleife beinhaltet; wobei der Druckfernsteuerungsvorgangseintrag die folgenden Vorgänge beinhaltet: einen Boost- und Druckentlastungsvorgang, einen Druckstabilisierungsvorgang, das Isolieren oder Inbetriebnehmen einer Entladeöffnungsplatte, das Isolieren oder Inbetriebnehmen von Ladung und Entladung, das Zuführen von Steuerdruck mit der Überschussentladung und Hauptpumpen-Sperrdampfabdichtung und das Aufrechterhalten eines Stabildruckvorgangs unter anormalen Umständen.

6. Informationsverarbeitungsverfahren für digitale Steuersysteme von Kernkraftwerksblöcken nach Anspruch 3, wobei
das Verfahren nach dem Schritt (S103), in dem die digitale Betriebsliste (2) die Verbindungsanweisung an die Unterstützungsschnittstelle (3) sendet, ferner folgenden Schritte umfasst:
Ausführen der Start-Stopp-Steuerung eines Turbogeneratorsatzes der Kernkraftanlage durch die Turbinen-Start-Stopp-Steuerungs-Verfolgungsschnittstelle mit den folgenden Teilschritten:
Detektieren (S401) des Betriebszustands und der Betriebsparameter des Turbogeneratorsatzes, des Betriebszustands und der Betriebsparameter eines Hilfssystem des Turbogeneratorsatzes und der während des Betriebs des Turbogeneratorsatzes auftretenden Fehlerinformationen;
zentrales Anzeigen (S402) des detektierten Betriebszustands und der detektierten Betriebsparameter des Turbogeneratorsatzes, des Betriebszustands und der Betriebsparameter eines Hilfssystems des Turbogeneratorsatzes und der während des Betriebs des Turbogeneratorsatzes auftretenden Fehlerinformationen auf der Turbinen-Start-Stopp-Steuerungs-Verfolgungsschnittstelle; und
direktes Steuern (S403) des Start-Stopps des Turbogeneratorsatzes gemäß dem (den) detektierten Betriebszustand und Betriebsparametern des Turbogeneratorsatzes, dem (den) Betriebszustand und Betriebsparametern eines Hilfssystems des Turbogeneratorsatzes und den während des Betriebs des Turbogeneratorsatzes auftretenden Fehlerinformationen, die auf der Turbinen-Start-Stopp-Steuerungs-Verfolgungsschnittstelle angezeigt werden.

7. Informationsverarbeitungsverfahren für digitale Steuersysteme von Kernkraftwerksblöcken nach Anspruch 6, wobei
der Schritt des zentralen Anzeigens (S402) des detektierten Betriebszustands und der detektierten Betriebsparameter des Turbogeneratorsatzes, des Betriebszustands und der Betriebsparameter eines Hilfssystems des Turbogeneratorsatzes und der während des Betriebs des Turbogeneratorsatzes auftretenden Fehlerinformationen auf der Turbinen-Start-Stopp-Steuerungs-Verfolgungsschnittstelle insbesondere Folgendes vorsieht:
zentrales Anzeigen (S502) des detektierten Betriebszustands und der detektierten Betriebsparameter des Turbogeneratorsatzes, des Betriebszustands und der Betriebsparameter eines Hilfssystems des Turbogeneratorsatzes, der während des Betriebs des Turbogeneratorsatzes auftretenden Fehlerinformationen und einer dritten Verknüpfungsschaltfläche auf der Turbinen-Start-Stopp-Steuerungs-Verfolgungsschnittstelle; wobei das Verfahren hier ferner die folgenden Schritte umfasst:
gemäß dem (den) detektierten Betriebszustand und Betriebsparametern des Turbogeneratorsatzes, dem (den) Betriebszustand und Betriebsparametern eines Hilfssystems des Turbogeneratorsatzes und den während des Betriebs des Turbogeneratorsatzes auftretenden Fehlerinformationen, die auf der Turbinen-Start-Stopp-Steuerungs-Verfolgungsschnittstelle ausgegeben werden, Verknüpfen mit einer spezifizierten Systemschnittstelle (6) durch die dritte Verknüpfungsschaltfläche, die auf der Turbinen-Start-Stopp-Steuerungs-Verfolgungsschnittstelle angezeigt wird, und detailliertes Steuern des Start-Stopps des Turbogeneratorsatzes über diese spezifizierte Systemschnittstelle (6) (S503).

8. Informationsverarbeitungsverfahren für digitale Steuersysteme von Kernkraftwerksblöcken nach einem der Ansprüche 1 - 7, wobei
das Verfahren ferner die folgenden Schritte umfasst: Ausgeben von logischen Strukturinformationen über ein Gesamtprogramm der Kernkraftwerksblöcke über die Strukturelle-Navigations-Schnittstelle; und
wobei das Verfahren vor dem Schritt des Ausgebens der logischen Strukturinformationen über das Gesamtprogramm der Kernkraftwerksblöcke über die Strukturelle-Navigations-Schnittstelle ferner die folgenden Schritte umfasst: Suchen der Strukturelle-Navigations-Schnittstelle gemäß dem Hauptprogrammkörper (1) und Ausgeben der logischen Strukturinformationen des Gesamtprogramms der Kernkraftwerksblöcke über die gefundene Strukturelle-Navigations-Schnittstelle; und
wobei das Verfahren nach dem Schritt des Suchens der Strukturelle-Navigations-Schnittstelle gemäß dem Hauptprogrammkörper (1) und des Ausgebens der logischen Strukturinformationen des Gesamtprogramms der Kernkraftwerksblöcke über die gefundene Strukturelle-Navigations-Schnittstelle ferner die folgenden Schritte umfasst:
die Strukturelle-Navigations-Schnittstelle sendet die Verknüpfungsanweisung an die digitale Betriebsliste (2) und/oder die Unterstützungsschnittstelle (3), um eine Verknüpfung mit der durch die Verknüpfungsanweisung bestimmten digitalen Betriebsliste (2) und/oder der Unterstützungsschnittstelle (3) herzustellen; und/oder
die Strukturelle-Navigations-Schnittstelle sendet die Verknüpfungsanweisung an das Systemprogramm (5) und/oder die im Systemprogramm (5) enthaltene Systemschnittstelle (6), um eine Verknüpfung mit dem durch die Verknüpfungsanweisung spezifizierten Systemprogramm (5) und/oder der im Systemprogramm (5) enthaltenen Systemschnittstelle (6) herzustellen.

9. Informationsverarbeitungsverfahren für digitale Steuersysteme von Kernkraftwerksblöcken nach Anspruch 8, wobei
das Verfahren nach dem Schritt des Ausgebens der logischen Strukturinformationen des Gesamtprogramms der Kernkraftwerksblöcke über die Strukturelle-Navigations-Schnittstelle ferner den folgenden Schritt umfasst: Eintreten in das digitale System des Gesamtprogramms der Kernkraftwerksblöcke über die Strukturelle-Navigations-Einheit (4); und
der Schritt des Eintretens in das digitale System des Gesamtprogramms der Kernkraftwerksblöcke über die Strukturelle-Navigations-Einheit (4) insbesondere Folgendes vorsieht: Anzeigen der Betriebszustandsinformationen der Einheiten, einer Ausführungssequenz und einer logischen Beziehung zwischen verschiedenen Unterprogrammen eines Gesamtbetriebsprogramms sowie von Umschaltinformationen zwischen verschiedenen Betriebszuständen während des Start-Stopp-Prozesses der Kernkraftwerksblöcke über eine erste Anzeigevorrichtung (41);
wobei die erste Anzeigevorrichtung (41) die Verknüpfungsanweisung an eine zweite Anzeigevorrichtung (42) sendet und die zweite Anzeigevorrichtung (42), die die Verknüpfungsanweisung empfangen hat, die logischen Strukturinformationen innerhalb des entsprechenden Unterprogramms anzeigt; und
wobei das Verfahren nach dem Schritt, in dem die zweite Anzeigevorrichtung (42), die die Verknüpfungsanweisung empfangen hat, die logischen Strukturinformationen innerhalb des entsprechenden Unterprogramms anzeigt, ferner die folgenden Schritte umfasst:
die zweite Anzeigevorrichtung (42) sendet die Verknüpfungsanweisung an einen Systembildschirm, um eine Verknüpfung mit dem durch die Verknüpfungsanweisung spezifizierten Systembildschirm herzustellen und/oder
die zweite Anzeigevorrichtung (42) sendet die Verknüpfungsanweisung an einen Überwachungs- und Betriebsbildschirm, um eine Verknüpfung mit dem durch die Verknüpfungsanweisung spezifizierten Überwachungs- und Betriebsbildschirm herzustellen.

10. Informationsverarbeitungsverfahren für digitale Steuersysteme von Kernkraftwerksblöcken nach Anspruch 8, wobei
das Verfahren nach dem Schritt des Ausgebens der logischen Strukturinformationen des Gesamtprogramms der Kernkraftwerksblöcke über die Strukturelle-Navigations-Schnittstelle ferner den folgenden Schritt umfasst: Eintreten in das digitale System des Gesamtprogramms der Kernkraftwerksblöcke über die Strukturelle-Navigations-Einheit (4); und
der Schritt des Eintretens in das digitale System des Gesamtprogramms der Kernkraftwerksblöcke durch die Strukturelle-Navigations-Einheit (4) insbesondere Folgendes vorsieht:
Anzeigen der Betriebszustandsinformationen der Einheiten, einer Ausführungssequenz und einer logischen Beziehung zwischen verschiedenen Unterprogrammen eines Gesamtbetriebsprogramms sowie von Umschaltinformationen zwischen verschiedenen Betriebszuständen während des Start-Stopp-Prozesses der Kernkraftwerksblöcke durch eine erste Anzeigevorrichtung (41);
wobei die erste Anzeigevorrichtung (41) die Verknüpfungsanweisung an eine zweite Anzeigevorrichtung (42) sendet und die zweite Anzeigevorrichtung (42), die die Verknüpfungsanweisung empfangen hat, die logischen Strukturinformationen innerhalb des entsprechenden Unterprogramms anzeigt; und
wobei das Verfahren nach dem Schritt, in dem die zweite Anzeigevorrichtung (42), die die Verknüpfungsanweisung empfangen hat, die logischen Strukturinformationen des entsprechenden Unterprogramms anzeigt, ferner die folgenden Schritte umfasst:
die zweite Anzeigevorrichtung (42) sendet die Verknüpfungsanweisung an verschiedene Navigationsseiten, die im entsprechenden Unterprogramm enthalten sind, um eine Verknüpfung mit der durch die Verknüpfungsanweisung spezifizierten Navigationsseite herzustellen; und/oder
die zweite Anzeigevorrichtung (42) sendet die Verknüpfungsanweisung an die erste Anzeigevorrichtung (41), um eine Verknüpfung mit der ersten Anzeigevorrichtung (41) herzustellen.

## Revendications

1. Procédé de traitement des informations des systèmes de contrôle numériques de centrales nucléaires, où le procédé comprend les étapes suivantes :
la production (S101) par l'intermédiaire d'un corps de programme principal (1) d'une information de tâche, ainsi que d'une information de liste opérationnelle numérique et d'une information d'interface de support correspondant à l'information de tâche, et la recherche d'une liste opérationnelle numérique (2) correspondant à une tâche spécifiée selon le corps de programme principal (1) ;
la production (S102) de détails de tâche, d'informations de dispositif auxquelles les détails de tâche correspondent, et d'informations de liaison de tâche par l'intermédiaire de la liste opérationnelle numérique trouvée (2) ;
la liste opérationnelle numérique (2) envoie une instruction de liaison à une interface de support (3), et l'interface de support (3) qui reçoit l'instruction de liaison produit des paramètres de supervision intersystème et des instructions d'exploitation (S103) ;
**caractérisé en ce que**
le procédé comprend en outre les étapes suivantes avant l'étape de production par l'intermédiaire (S102) du corps de programme principal (1) de l'information de tâche, ainsi que de l'information de liste opérationnelle numérique et de l'information d'interface de support correspondant à l'information de tâche, et la recherche de la liste opérationnelle numérique (2) correspondant à la tâche spécifiée selon le corps de programme principal (1) ;
l'isolement des opérations liées d'une salle de contrôle principale à partir des réglementations papier, et la génération du corps de programme principal (1) selon le contenu des réglementations papier après l'isolement des opérations liées de la salle de contrôle principale ; et
en fonction de différents objectifs et tâches, la génération de la liste opérationnelle numérique (2) correspondant aux tâches des opérations liées de la salle de contrôle principale isolées des réglementations papier.

2. Procédé de traitement des informations des systèmes de contrôle numériques de centrales nucléaires selon la revendication 1, où
l'interface de support (3) comprend au moins une interface d'affichage d'état (31) et une interface de suivi de fonction (32) ; et
l'étape (S103) selon laquelle la liste opérationnelle numérique (2) envoie l'instruction de liaison à l'interface de support (3), et l'interface de support (3) qui reçoit l'instruction de liaison produit les paramètres de supervision et les instructions d'exploitation intersystèmes précisément comme suit :
la liste opérationnelle numérique (2) envoie l'instruction de liaison à l'interface d'affichage d'état (31), avec des paramètres importants, des états de dispositifs importants, des signes d'accidents et des conditions d'accidents supervisés par l'interface d'affichage d'état (31) spécifiés par l'instruction de liaison ; et/ou
la liste opérationnelle numérique (2) envoie l'instruction de liaison à l'interface de suivi des fonctions (32), un dispositif d'exploitation et un paramètre de surveillance requis d'une étape prédéfinie ou d'une opération complète prédéfinie suivis par l'interface de suivi des fonctions (32) spécifiée par l'instruction de liaison.

3. Procédé de traitement des informations des systèmes de contrôle numériques de centrales nucléaires selon la revendication 2, où
l'interface d'affichage d'état (31) comprend une interface d'affichage de décharge complète de réacteur, une interface d'affichage d'arrêt à froid de charge, une interface d'affichage d'arrêt à froid de maintien, une interface d'affichage de mode d'arrêt normal refroidi par un système d'élimination de la chaleur résiduelle, une interface d'affichage d'état d'isolement du système d'élimination de la chaleur résiduelle, une interface d'affichage de réacteur en marche, une interface d'affichage de supervision de l'état de la deuxième boucle et une interface d'affichage de supervision de l'état d'alarme importantes pour la sécurité des centrales pendant une période d'arrêt pour révision ; et
l'interface de suivi des fonctions (32) comprend une interface de suivi de contrôle du niveau d'eau de l'évaporateur, une interface de contrôle de test de pression d'eau de la première boucle (322), une interface de suivi du démarrage-arrêt de la deuxième boucle d'eau, une interface de suivi de l'interrupteur d'alimentation auxiliaire et une interface de suivi de contrôle du démarrage-arrêt de la turbine.

4. Procédé de traitement des informations des systèmes de contrôle numérique de centrales nucléaires selon la revendication 3, où le procédé comprend en outre les étapes suivantes après l'étape (S103) où la liste opérationnelle numérique (2) envoie l'instruction de liaison à l'interface de support (3) :
la réalisation du contrôle numérique d'un test de pression d'eau de la première boucle d'une centrale nucléaire à réacteur à eau pressurisée (REP) par l'intermédiaire de l'interface de contrôle du test de pression d'eau de la première boucle (322), comprenant les sous-étapes suivantes :
l'affichage centralisé (S201) de paramètres clés, d'entrées d'opérations de contrôle et d'alarmes importantes liés au test de pression d'eau de la première boucle de la centrale nucléaire REP sur l'interface de contrôle du test de pression d'eau de la première boucle (322) ; et
conformément aux paramètres clés affichés sur l'interface de contrôle du test de pression d'eau de la première boucle (322), l'exécution (S202) de l'opération de contrôle correspondante sur un processus d'un test de pression d'eau de la première boucle directement par l'entrée d'opération de contrôle affichée sur l'interface de contrôle du test de pression d'eau de la première boucle (322).

5. Procédé de traitement des informations des systèmes de contrôle numérique de centrales nucléaires selon la revendication 4, où
les paramètres clés liés au test de pression d'eau de la première boucle comprennent un canal de mesure de la pression normale de la première boucle à grande échelle, un canal de mesure de la pression de la première boucle dédié au test de pression d'eau à grande/petite échelle, un niveau d'eau du réservoir de contrôle de la capacité, une température moyenne pondérée de la première boucle, un taux de changement de la pression de la première boucle, un flux de charge, un flux de décharge, une pression de décharge, un flux d'injection de vapeur d'étanchéité de la pompe principale, et une pression de décharge excédentaire ; et
le canal de mesure à grande échelle de la pression normale de la première boucle est affiché sur l'interface de contrôle du test de pression d'eau de la première boucle (322) en suivant la tendance, et le niveau d'eau du réservoir de contrôle de la capacité est affiché sur l'interface de contrôle du test de pression d'eau de la première boucle (322) en suivant les paramètres et les tendances simultanément ; et
l'entrée d'opération de contrôle liée au test de pression d'eau de la première boucle comprend une entrée d'opération de contrôle du dispositif et une entrée d'opération de contrôle à distance de la pression, où l'entrée d'opération de contrôle du dispositif comprend une pompe principale de la première boucle, une pompe de charge, une pompe de test de pression d'eau, une boucle de charge et une vanne de celle-ci, une boucle de décharge, une boucle d'infusion d'étanchéité à la vapeur de la glande de la pompe principale, une boucle de reflux d'étanchéité à la vapeur de la glande de la pompe principale et de décharge excessive, et une boucle de protection de la pression ; l'entrée d'opération de contrôle à distance de la pression comprend les opérations suivantes : une opération de surpression et de dépressurisation, une opération de stabilisation de la pression, l'isolement ou la mise en service d'une plaque à orifices de décharge, l'isolement ou la mise en service de la charge et de la décharge, l'infusion de la pression de contrôle avec l'excès de décharge et l'étanchéité à la vapeur du gland de la pompe principale, et le maintien d'une opération de pression stable dans des circonstances anormales.

6. Procédé de traitement des informations des systèmes de contrôle numérique des centrales nucléaires selon la revendication 3, où
le procédé comprend en outre les étapes suivantes après l'étape (S103) selon laquelle la liste opérationnelle numérique (2) envoie l'instruction de liaison à l'interface de support (3) :
la réalisation du contrôle du démarrage-arrêt d'un ensemble turbogénérateur de la centrale nucléaire par l'interface de suivi de contrôle du démarrage-arrêt de la turbine, comprenant les sous-étapes suivantes :
la détection (S401) de l'état opérationnel et des paramètres opérationnels de l'ensemble turbogénérateur, de l'état opérationnel et des paramètres opérationnels d'un système auxiliaire de l'ensemble turbogénérateur, et des informations de défaillance apparaissant pendant le fonctionnement de l'ensemble turbogénérateur ;
l'affichage centralisé (S402) de l'état opérationnel et des paramètres opérationnels détectés de l'ensemble turbogénérateur, de l'état opérationnel et des paramètres opérationnels d'un système auxiliaire de l'ensemble turbogénérateur, et des informations de défaillance apparaissant pendant le fonctionnement de l'ensemble turbogénérateur sur l'interface de suivi de contrôle du démarrage-arrêt de la turbine ; et
le contrôle direct (S403) du démarrage-arrêt de l'ensemble turbogénérateur selon l'état opérationnel et les paramètres opérationnels détectés de l'ensemble turbogénérateur, l'état opérationnel et les paramètres opérationnels d'un système auxiliaire de l'ensemble turbogénérateur, et les informations de défaillance apparaissant pendant le fonctionnement de l'ensemble turbogénérateur affiché sur l'interface de suivi de contrôle du démarrage-arrêt de la turbine.

7. Procédé de traitement des informations des systèmes de contrôle numérique des centrales nucléaires selon la revendication 6, où
l'étape d'affichage centralisé (S402) de l'état opérationnel et des paramètres opérationnels détectés de l'ensemble turbogénérateur, de l'état opérationnel et des paramètres opérationnels d'un système auxiliaire de l'ensemble turbogénérateur, et des informations de défaillance apparaissant pendant le fonctionnement de l'ensemble turbogénérateur sur l'interface de suivi de contrôle du démarrage-arrêt de la turbine est précisément comme suit :
l'affichage centralisé (S502) de l'état de fonctionnement et des paramètres de fonctionnement détectés de l'ensemble turbogénérateur, de l'état de fonctionnement et des paramètres de fonctionnement d'un système auxiliaire de l'ensemble turbogénérateur, des informations de défaillance apparaissant pendant le fonctionnement de l'ensemble turbogénérateur, et d'un troisième bouton de liaison sur l'interface de suivi de contrôle du démarrage-arrêt de la turbine ; le procédé comprend en outre les étapes suivantes :
en fonction de l'état de fonctionnement et des paramètres de fonctionnement détectés de l'ensemble turbogénérateur, de l'état de fonctionnement et des paramètres de fonctionnement d'un système auxiliaire de l'ensemble turbogénérateur, et des informations de défaillance apparaissant pendant le fonctionnement de l'ensemble turbogénérateur produites sur l'interface de suivi de contrôle du démarrage-arrêt de la turbine, l'établissement d'une liaison avec une interface de système spécifiée (6) par l'intermédiaire du troisième bouton de liaison affiché sur l'interface de suivi de contrôle du démarrage-arrêt de la turbine, et le contrôle en détail du démarrage-arrêt de l'ensemble turbogénérateur par l'intermédiaire de cette interface de système spécifiée (6) (S503).

8. Procédé de traitement des informations des systèmes de contrôle numérique des centrales nucléaires selon l'une quelconque des revendications 1 à 7, où
le procédé comprend en outre les étapes suivantes : la production d'informations de structure logique d'un programme global des centrales nucléaires par l'intermédiaire de l'interface de navigation structurelle ; et
le procédé comprend en outre les étapes suivantes avant l'étape de production des informations de structure logique du programme global des centrales nucléaires par l'interface de navigation structurelle : la recherche de l'interface de navigation structurelle selon le corps de programme principal (1), et la production des informations de structure logique du programme global des centrales nucléaires par l'interface de navigation structurelle trouvée ; et
le procédé comprend en outre les étapes suivantes après l'étape de recherche de l'interface de navigation structurelle selon le corps de programme principal (1) et de production des informations de structure logique du programme global des centrales nucléaires par l'interface de navigation structurelle trouvée : l'interface de navigation structurelle envoie l'instruction de liaison à la liste opérationnelle numérique (2) et/ou à l'interface de support (3), de manière à établir une liaison avec la liste opérationnelle numérique (2) et/ou l'interface de support (3) spécifiée par l'instruction de liaison ; et/ou
l'interface de navigation structurelle envoie l'instruction de liaison au programme système (5) et/ou à l'interface système (6) inclus dans le programme système (5), de manière à établir une liaison avec le programme système (5) et/ou l'interface système (6) inclus dans le programme système (5) spécifié par l'instruction de liaison.

9. Procédé de traitement des informations des systèmes de contrôle numérique des centrales nucléaires selon la revendication 8, où
le procédé comprend en outre l'étape suivante après l'étape de production des informations de structure logique du programme global des centrales nucléaires par l'interface de navigation structurelle : l'entrée dans le système numérique du programme global des centrales nucléaires par l'unité de navigation structurelle (4) ; et
l'étape d'entrée dans le système numérique du programme global des centrales nucléaires par l'intermédiaire de l'unité de navigation structurelle (4) est précisément comme suit: l'affichage par l'intermédiaire d'un premier dispositif d'affichage (41) des informations d'état opérationnel des centrales, d'une séquence d'exécution et d'une relation logique entre divers sous-programmes d'un programme opérationnel global, et des informations de commutation entre divers états opérationnels pendant le processus de démarrage-arrêt des centrales nucléaires ;
le premier dispositif d'affichage (41) envoie l'instruction de liaison à un second dispositif d'affichage (42) ; et le second dispositif d'affichage (42) qui a reçu l'instruction de liaison affiche les informations de structure logique à l'intérieur du sous-programme correspondant ; et
le procédé comprend en outre les étapes suivantes après l'étape où le deuxième dispositif d'affichage (42) qui a reçu l'instruction de liaison affiche les informations de structure logique à l'intérieur du sous-programme correspondant :
le deuxième dispositif d'affichage (42) envoie l'instruction de liaison à un écran système, de manière à établir une liaison avec l'écran système spécifié par l'instruction de liaison ; et/ou
le deuxième dispositif d'affichage (42) envoie l'instruction de liaison à un écran de supervision et d'exploitation, de manière à établir une liaison avec l'écran de supervision et d'exploitation spécifié par l'instruction de liaison.

10. Procédé de traitement des informations des systèmes de contrôle numérique des centrales nucléaires selon la revendication 8, où
le procédé comprend en outre l'étape suivante après l'étape de production des informations de structure logique du programme global des centrales nucléaires par l'interface de navigation structurelle : l'entrée dans le système numérique du programme global des centrales nucléaires par l'unité de navigation structurelle (4) ; et
l'étape d'entrée dans le système numérique du programme global des centrales nucléaires par l'intermédiaire de l'unité de navigation structurelle (4) est précisément comme suit :
l'affichage, par l'intermédiaire d'un premier dispositif d'affichage (41), des informations d'état opérationnel des unités, d'une séquence d'exécution et d'une relation logique entre divers sous-programmes d'un programme opérationnel global, et des informations de commutation entre divers états opérationnels pendant le processus de démarrage-arrêt des centrales nucléaires ;
le premier dispositif d'affichage (41) envoie l'instruction de liaison à un second dispositif d'affichage (42) ; et le second dispositif d'affichage (42) qui a reçu l'instruction de liaison affiche les informations de structure logique à l'intérieur du sous-programme correspondant ; et
le procédé comprend en outre les étapes suivantes après l'étape où le deuxième dispositif d'affichage (42) qui a reçu l'instruction de liaison affiche les informations de structure logique du sous-programme correspondant :
le deuxième dispositif d'affichage (42) envoie l'instruction de liaison à diverses pages de navigation incluses dans le sous-programme correspondant, de manière à établir une liaison avec la page de navigation spécifiée par l'instruction de liaison ; et/ou
le deuxième dispositif d'affichage (42) envoie l'instruction de liaison au premier dispositif d'affichage (41), de manière à établir une liaison avec le premier dispositif d'affichage (41).
